# EUROPEAN PATENT APPLICATION

(11) **EP 4 796 320 A1**
(43) Date of publication of application: **26.08.2026**
(21) Application number: 25159958.5
(22) Date of filing: 25.02.2025
(51) Int. Cl.: B32B 27/12, B32B 27/32, B32B 5/02

(54) **COMPOSITE LAMINA FOR FORMING LUGGAGE ARTICLES**

(71) Applicant: Samsonite IP Holdings S.à r.l., 1931 Luxembourg (LU)
(72) Inventor: KOSLOWSKI, Pauline, 2650 Antwerpen (BE); VANDEN BULCKE, Nathan, 8790 Waregem (BE)
(74) Representative: Kilburn & Strode LLP

(57) **Abstract**

A luggage shell (720, 722, 734) formed by a laminate (100, 210) is disclosed. The laminate (100, 210) includes a first set of BOPP films (110), at least one of the first set of BOPP films (110) including a film having a core (202, 302) of a thermoplastic polymer and at least one outer layer (204) of a thermoplastic polymer, both of which may be coextruded. The laminate (100) includes a second set of BOPP films (120), each of the second set of BOPP films including a coextruded film having a core (202, 302) of a thermoplastic polymer and at least one outer layer (204) of a thermoplastic polymer. The laminate (100, 210) includes at least one sheet of woven plastic material (130, 150, 400) disposed between the first set of BOPP films (110) and the second set of BOPP films (120). The laminate (100) includes at least one matrix layer (140, 141, 142, 143) disposed on at least one side, such as a top or outer-facing side, of one or more of the at least one sheet of woven plastic material (130, 150, 400).

## Description

### BACKGROUND

Hard side luggage cases provide durability and support by using formable, relatively hard materials to create the exterior of the case. One drawback of these materials is that they are difficult to manufacture and mold, demonstrating low tolerance of subtle variations in the manufacturing and molding processes. The unforgiving nature of the materials is particularly noticeable when producing deep drawn articles. A luggage shell or case produced from the materials may need to be relatively thick and/or relatively heavy to achieve the desired strength. The materials as well as the manufacturing and molding processes may also be expensive and the processes may be time-consuming.

Documents that may be related to the present disclosure in that they include various approaches to materials for luggage articles include US 8,052,913, US 11,135,756, and EP 3455063. WO2022/263585 discloses a formable and tear resistant polymeric composite. The composite includes outer woven polymer fabric layers disposed around a core of oriented polymer films and bonded thereto via adhesives. The composite is formable, such as for luggage. These approaches, however, may be improved.

### SUMMARY

Embodiments described herein relate to luggage shells formed from laminates having multiple sets of biaxially oriented polypropylene (BOPP) films, at least one sheet of woven plastic material (e.g., self-reinforced polypropylene sheet), and at least one matrix layer disposed above the at least one sheet of woven plastic material.

The present disclosure in particular provides an improved plastic laminate material that is thin, lightweight, strong, and impact resistant. The material is versatile and amenable to being deep drawn into articles such as luggage shells. A luggage shell constructed of the laminate is lightweight, thin, durable, resistant to deformation, and has exceptional impact resistance and resiliency during use and handling.

In an embodiment, a luggage shell formed by a laminate is disclosed. The laminate includes a first set of BOPP films, at least one of the first set of BOPP films including a film having a core of a thermoplastic polymer and at least one outer layer of a thermoplastic polymer, both of which may be coextruded. The laminate includes a second set of BOPP films, each of the second set of BOPP films including a coextruded film having a core of a thermoplastic polymer and at least one outer layer of a thermoplastic polymer. The laminate includes at least one sheet of woven plastic material disposed between the first set of BOPP films and the second set of BOPP films. The laminate includes at least one matrix layer disposed on at least one side, such as a top or outer-facing side, of one or more of the at least one sheet of woven plastic material.

The BOPP films include at least one thermoplastic polymer layer that is stretched to a greater extent in one of a transverse direction and a machine (e.g., longitudinal) direction than in the other of the transverse direction and the machine direction. The stretched films are referred to as biaxially oriented polypropylene films and provide greater strength and melting points than identically formulated unstretched films.

The at least one sheet of woven plastic material may include, a self-reinforced polypropylene (SRPP) sheet, which includes oriented (e.g., stretched) polypropylene tapes woven to form a fabric having improved strength and heat resistance in the machine direction of the tapes compared to non-woven layers. Accordingly, the woven tapes provide increased strength in both the machine and transverse directions of the resulting sheet of woven plastic material and the laminate including the same.

In some examples, the luggage shell further comprises a third set of BOPP films disposed between the first set of BOPP films and the second set of BOPP films. In such examples, the at least one sheet of woven plastic material includes a first sheet of woven plastic material disposed between the first set of BOPP films and the third set of BOPP films, and a second sheet of woven plastic material disposed between the second set of BOPP films and the third set of BOPP films.

In some examples, the at least one matrix layer includes a first matrix layer disposed on the top or outer facing side of the first sheet of woven plastic material, a second matrix layer disposed on a bottom or inner facing side of the first sheet of woven plastic material, and a third matrix layer disposed on a top or outer facing side of the second sheet of woven plastic material.

The at least one matrix layer provides for strong bonding of the sheet of woven plastic material to adjacent layers, such as the at least one sheet of woven plastic material and a BOPP film adjacent thereto. The sheet of woven plastic material, such as SRPP material, is difficult to bond to other materials, such as a polypropylene homopolymer or copolymer used in a BOPP film.

In some examples, the luggage shell includes the first set of BOPP films having 1 to 10 BOPP films, the second set of BOPP films having 1 to 10 BOPP films, the third set of BOPP films having 1 to 20 BOPP films.

In some examples, the luggage shell includes the first set of BOPP films includes 3 to 5 BOPP films, the second set of BOPP films includes 3 to 6 BOPP films, the third set of BOPP films includes 7 to 14 BOPP films, and the at least one matrix layer includes a first matrix layer disposed on the top side of the first sheet of woven plastic material, a second matrix layer disposed on a bottom side of the first sheet of woven plastic material, and a third matrix layer disposed on a top side of the second sheet of woven plastic material.

In some examples, the luggage shell and laminate has a total thickness of 1.5 mm or less.

The laminates disclosed herein are relatively thin and still provide excellent strength, impact resistance, resiliency, and aesthetic appearance.

In some examples, the first set of BOPP films have a thickness of 5% to 15% of the total thickness of the laminate in the luggage shell.

In some examples, the second set of BOPP films has a thickness of 12% to 18% of the total thickness of the laminate in the luggage shell.

In some examples, the laminate includes the third set of BOPP films disposed between the first set of BOPP films and the second set of BOPP films. In such examples, the at least one sheet of woven plastic material includes a first sheet of woven plastic material disposed between the first set of BOPP films and the third set of BOPP films, a second sheet of woven plastic material disposed between the second set of BOPP films and the third set of BOPP films, a third sheet of woven plastic material disposed between the first sheet of woven plastic material and the second sheet of woven plastic material, and a fourth sheet of woven plastic material disposed between the third sheet of woven plastic material and the second sheet of woven plastic material. In such examples, the at least one matrix layer includes a first matrix layer disposed on the top side of the first sheet of woven plastic material, a second matrix layer disposed on a top side of the second sheet of woven plastic material, a third matrix layer disposed on a top side of the third sheet of woven plastic material, and a fourth matrix layer disposed on a top side of the fourth sheet of woven plastic material.

In some examples, the third set of BOPP films has a thickness of 35% to 45% of the total thickness of the laminate of the luggage shell.

In some examples, the first set of BOPP films has a thickness of 5% to 15% of a total thickness of the laminate, second set of BOPP films has a thickness of 12% to 18% of a total thickness of the laminate, and the third set of BOPP films has a thickness of 35% to 45% of the total thickness of the laminate.

In some examples, the at least one sheet of woven plastic material has a thickness of less than 10% of the total thickness of the laminate of the luggage shell.

The thickness of the at least one sheet of woven plastic material allows the laminate of the luggage shell to be strong, impact resistant, and resilient, while being relatively thin and light.

In some examples, the at least one matrix layer includes a maleic anhydride-grafted polypropylene (MAPP) layer or a polypropylene film layer.

In some examples the at least one sheet of woven plastic material includes at least one self-reinforced polypropylene (SRPP) sheet.

In some examples, the at least one sheet of woven plastic material includes a plurality of longitudinally stretched polypropylene tapes arranged in a selected weave pattern, and the selected weave pattern is visible through the first set of BOPP films.

In some examples, the at least one sheet of woven plastic material includes a colorant. In some examples, the at least one matrix material includes a colorant.

In some examples, one or more of the at least one matrix layer, the at least one sheet of woven plastic material, the first set of BOPP films, or the second set of BOPP films, or any combination of the above, includes a colorant, and the colorant is at least partially visible through the first set of BOPP films.

In some examples, the second set of BOPP films forms an inner surface of the laminate and an innermost BOPP film of the second set of BOPP films is white, and a color intensity of the laminate viewed from an outermost surface thereof exhibits a greater color intensity than an identically or similarly composed laminate that does not include the white innermost BOPP film.

By utilizing substantially transparent or translucent BOPP films and matrix layers between the outer surface of the laminate and the top or outer facing surface of the at least one sheet of woven plastic material, the aesthetic appearance of the laminate is selectively controlled to show the weave of the at least one sheet of woven plastic material. The colorant in the at least one matrix layer may be at least partially transparent or translucent to show the weave of the at least one sheet of woven plastic material with the color added thereto.

In some examples, one or more handles are attached to the at least one luggage shell, and a plurality of wheels are attached to the at least one luggage shell.

In an embodiment, a method of making a luggage shell is disclosed. The method includes forming a lay-up according to any of the laminates disclosed herein. The method may include laminating the lay-up at a uniform pressure in an isobaric press. The method includes forming the laminated lay-up into a luggage shell using a plug cavity mold.

The laminates disclosed herein are formed on a press at a uniform pressure to prevent air inclusions, delamination, and impaired physical properties (e.g., strength) in the resulting laminate and luggage shells. Additionally, the laminates disclosed herein provide material that is readily deep drawn in molds to form luggage shells with a pleasing aesthetic appearance.

By utilizing materials in the films that are polypropylene based, the films in the laminate may bond together and have physical properties that are complementary to each other. Such a configuration provides the advantages disclosed above.

Features from any of the disclosed embodiments may be used in combination with one another, without limitation. In addition, other features and advantages of the present disclosure will become apparent to those of ordinary skill in the art through consideration of the following detailed description and the accompanying drawings.

### BRIEF DESCRIPTION OF THE DRAWINGS

Understanding that these drawings depict only typical embodiments of the invention and are not therefore to be considered to be limiting of its scope, the embodiments of the invention will be described and explained with additional specificity and detail through the use of the accompanying drawings in which:
FIG. 1 is a cross-sectional diagram of a laminate for use in luggage shells, according to at least some embodiments.
FIG. 2 is an isometric view of a partially fragmented BOPP film, according to at least some embodiments.
FIG. 3 is an isometric view of a partially fragmented extruded tape, according to at least some embodiments.
FIG. 4 is an isometric cutaway view of a sheet of woven plastic material, according to at least some embodiments.
FIG. 5 is a schematic illustration of a double belt press, according to at least some embodiments.
FIG. 6A is an isometric view of a molding apparatus, according to at least some embodiments.
FIG. 6B is a perspective view of sheet gripping rack, according to an embodiment.
FIG. 6C is a perspective view of gripping bars of the gripping rack, according to an embodiment.
FIG. 7A is a front isometric view of a luggage shell, according to at least some embodiments.
FIG. 7B is a rear isometric view of the luggage shell, according to at least some embodiments.
FIG. 7C is an isometric view of a hard sided luggage case, according to at least one embodiment.
FIG. 8 is a flow diagram of a method for making a luggage shell, according to at least some embodiments.
FIGS. 9A and 9B are graphs of the results of stiffness testing of example luggage shells in the machine and transverse directions, respectively.
FIGS. 10A and 10B are graphs of the results of resilient testing of example luggage shells in the machine and transverse directions, respectively.
FIGS. 11A and 11B are graphs of the results of flexural modulus testing in the machine and transverse directions, respectively.
FIG. 12 is a graph of the results of T-Peel testing.
FIG. 13 is a graph of the results of more T-Peel testing.
FIG. 14 is graph of temperature profiles for Working Example 1.

### DETAILED DESCRIPTION

Embodiments described herein relate to luggage shells formed from laminates having multiple sets of BOPP films and at least one sheet of woven plastic material. The present disclosure provides an improved laminate material for a luggage shell and an improved luggage shell constructed of the material. In particular, the present disclosure provides a laminate that is lightweight, resilient (e.g., dent resistant), impact resistant, versatile, and amenable to being deep drawn. In general, the material is constructed of a set of plastic films laminated together. The luggage shell constructed from the material is lightweight, thin, durable, resistant to deformation, and resilient. The amenability of the material to a deep drawing process helps produce a luggage shell substantially free of wrinkles, including in the corner regions, and separately or in combination, helps produce a high-quality surface finish. As used herein, the term "constructed of" may mean "includes" or "including."

The present disclosure provides a method of making a strong, resilient, aesthetically pleasing laminate. The present disclosure also provides a method of making a luggage shell from the improved material that is relatively easy, fast, and inexpensive. The material may be heated, tensioned, and deep drawn to produce a luggage shell.

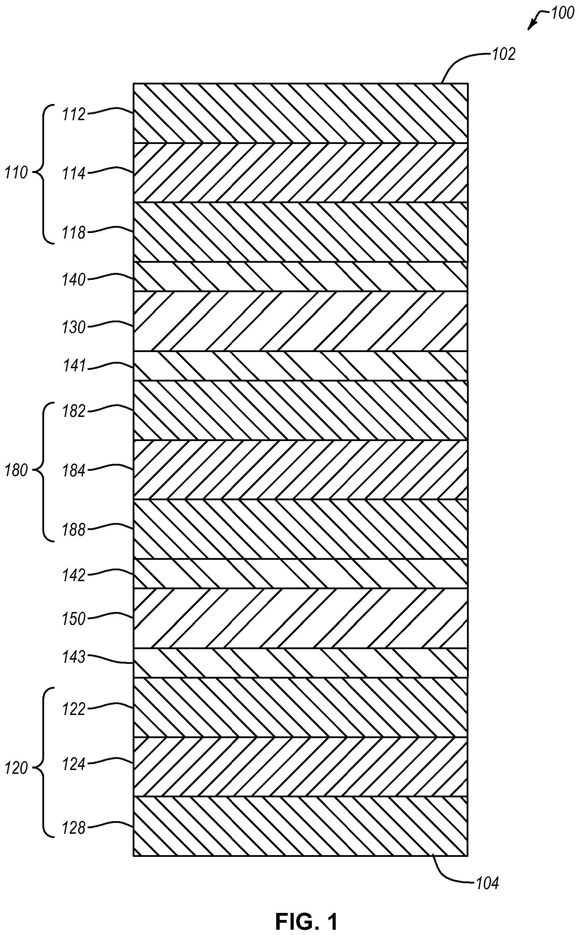

FIG. 1 is a cross-sectional diagram of a laminate 100 for use in luggage shells, according to at least some embodiments. The laminate 100 includes a set of polypropylene film layers. In some examples, the laminate 100 includes a first set of BOPP films 110, a second set of BOPP films 120, at least one sheet of woven plastic material (such as for example SRPP) 130 or 150 disposed between the first set of BOPP films 110 and the second set of BOPP films 120, and at least one matrix layer 140 or 142 disposed on at least one side, such as a top or outer facing surface or side, of one or more of the at least one sheet of woven plastic material 130 or 150. The laminate has an outer surface 102 facing outward (depicted as upward in FIG. 1) toward a viewer or external surface of a luggage shell. The laminate 100 includes an inner surface 104 facing away from the viewer or forming the inner surface of a luggage shell. The at least one sheet of woven plastic material 130 and 150 is located internal to the laminate 100, such as being located between the outer surface 102 and the inner surface 104.

As shown in FIG. 1, in some examples, the laminate 100 includes a third set of BOPP films 180 disposed between the first and second sets of BOPP films 110 and 120. In such examples, the laminate 100 includes both the first sheet of woven plastic material 130 disposed between the first set of BOPP films 110 and the third set of BOPP films 180, and the second sheet of woven plastic material 150 disposed between the second set of BOPP films 120 and the third set of BOPP films 180. Each sheet of woven plastic material includes at least one corresponding matrix layer 140 or 142 on at least one side, such as a top side, thereof. Additionally, the sheet of woven plastic material 130 and 150 each may independently include a matrix layer 141 or 143, respectively, on an opposite side thereof.

As explained in detail below, each of the sets of BOPP films 110, 120, or 180 includes at least one layer of an oriented thermoplastic film(s), and in examples more than one or every layer in each set of BOPP films 110, 120, or 180 are oriented thermoplastic film(s). The at least one sheet of woven plastic material 130 and 150 may include longitudinally stretched polypropylene tapes woven together in at least two directions (e.g., warp and weft) to form a polymer fabric. The at least one matrix layer 140-143 may include a polymer film (e.g., polypropylene) that is composed to bond to the at least one sheet of woven plastic material and BOPP film material between which it is positioned.

The individual film layers of the laminate 100 may be bonded together to form the laminate 100. Such film layers may be formed separately and combined to form a lay-up (e.g., sheet of stacked films, sheets, and layers) prior to, or contemporaneously, with bonding the film layers to form the laminate 100. While shown with 15 film layers, the laminate 100 may include at least 8 film layers, such as 8 film layers to 15 film layers, 10 film layers to 18 film layers, 15 film layers to 25 film layers, 25 film layers to 50 film layers, 25 film layers or less, or 20 film layers or less.

The laminate 100 may have a thickness of 3 mm or less, such as about 0.9 mm to about 1.5 mm, about 0.93 mm to about 1.23 mm, about 1.5 mm to about 2.5 mm, about 2 mm or less, about 1.5 mm or less, about 1.3 mm or less, about 1.20 mm or less, about 1.15 mm or less, or greater than 0.5 mm. The laminate 100 may have a weight of at least about 0.7 g/m², such as about 0.7 g/m² to about 3.0 g/m², about 0.7 g/m² to about 1.3 g/m², about 1.0 g/m² to about 1.2 g/m², about 1.2 g/m² to about 1.8 g/m², about 1.8 g/m² to about 2.5 g/m², less than about 2.5 g/m², less than about 1.5 g/m², less than about 1.2 g/m². The relatively thin and light laminate 100 provides excellent rigidity, dent resistance, and ability to be deep drawn during forming.

The individual film layers of the laminate 100 have similar or diverse properties and characteristics in order to provide a selected rigidity, aesthetic appearance, weight, resilience (dent resistance), versatility, and ability to be deep drawn in the resulting laminate 100. The various layers of the laminate 100 are discussed separately below.

The first set of BOPP films 110 may include one or more BOPP films or 2 or more BOPP films, such as 1 to 10 BOPP films, 2 to 10 BOPP films, 3 to 5 BOPP films, 5 to 8 BOPP films, less than 10 BOPP films, or less than 5 BOPP films. For example, the first set of BOPP films 110 may include at least BOPP films 112, 114, and 118. The first set of BOPP films 110 may have a total thickness of about 50 µm or more, such as about 50 µm to about 250 µm, about 80 µm to about 120 µm, about 120 µm to about 180 µm, about 180 µm to about 250 µm, less than 250 µm, or less than 150 µm. For example, the first set of BOPP films 110 may be about 100 µm thick. The first set of BOPP films 110 may have a thickness of 5% to 15% of a total thickness of the laminate 100. The thickness of each of the BOPP films 112, 114, or 118 may be the same or differ from one another. The BOPP films 112, 114, or 118 may differ from each other in other characteristics, such as material composition, surface treatment, or the like.

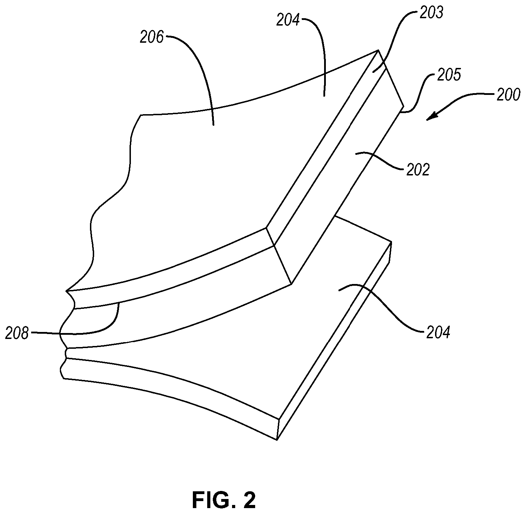

At least some of (e.g., each) BOPP films 112, 114, or 118 may include of a core layer of a biaxially oriented thermoplastic polymer and at least one outer layer of a thermoplastic polymer. FIG. 2 is an isometric view of a partially fragmented BOPP film 200, according to at least some embodiments. The BOPP film 200 may be independently used as BOPP films 112, 114, or 118 (FIG. 1) in the first set of BOPP films 110. As used herein, a "film" is a structure that includes at least one individual layer of a continuous sheet. The BOPP film 200 includes, in this example, at least one core layer 202 and at least one outer layer 204. The at least one outer layer 204 may be positioned on a top side 203 of the core 202, a bottom side 205, or both. In some examples (not shown), the BOPP film 200 may not include the at least one outer layer 204.

The core layer 202 is constructed of a thermoplastic polymer. The thermoplastic polymer may be oriented in one or more directions such as biaxially oriented. As used herein, a "biaxially oriented" film is a film that has been stretched in two different directions, including as a non-limiting example being stretched in a transverse direction and a machine (e.g., longitudinal) direction. The biaxially oriented film, in examples, may be stretched up to twelve times the original dimension of the unstretched film in the transverse direction (e.g., 6-10 or 9 times) and up to ten times the original dimension of the unstretched film in the machine direction (e.g., 3-8 or 4-6 times).

Examples of biaxially oriented thermoplastic polymers include biaxially oriented polypropylene homopolymer (BOPP), polyamide (BOPA), polyester (BOPET), polyvinyl alcohol (BOPVA), polylactic acid (BOPLA), and polyethylene (BOPE). In one embodiment, the core layer 202 is constructed of BOPP.

The at least one outer layer 204 is constructed of an oriented or non-oriented heat-sealable material. In some examples, the at least one outer layer 204 is substantially only polypropylene (PP). In some examples, the at least one outer layer 204 is constructed of a copolymer of PP and polyethylene (PE). Polyethylene may constitute up to about 5% of the copolymer. In some examples, the outer layer 204 is constructed of a terpolymer of PP, PE, and polybutene (PB). Polyethylene and polybutene together may constitute up to about 5% of the terpolymer. Any of the materials of the biaxially oriented thermoplastic polymers disclosed herein may be formed at least partially of recycled material(s), such as at least 10% recycled PP (e.g., at least 75% or at least 90%).

In some examples, the core 202 and the at least one outer layer 204 include compatible or complementary polymers, such that the core 202 and the at least one outer layer 204 may be coextruded. For example, the core 202 and at least one outer layer 204 may be constructed of thermoplastic polymers. In some examples, the core 202 is constructed of an oriented polypropylene homopolymer (OPP) and the at least one outer layer 204 is constructed of a copolymer of PP and PE. In some examples, the core 202 is constructed of an oriented polypropylene homopolymer and the at least one outer layer 204 is constructed of a terpolymer of PP, PE, and polybutene. In some examples, the core 202 is constructed of a PP polymer and the at least one outer layer 204 is constructed of a PP polymer or PP/PE copolymer. The core 202 may have a melting point of about 150 °C to about 190 °C, such as about 170 °C.

The at least one outer layer 204 has a lower melting point than the core 202. The at least one outer layer 204 may have a melting point of about 110 °C to about 135 °C, such as about 130 °C. The difference between the melting point of the core 202 and the melting point of the at least one outer layer 204 may be from about 10 °C to about 60 °C, or from about 10 °C to about 50 °C, or from about 10 °C to about 40 °C, or from about 10 °C to about 30 °C, or from about 10 °C to about 20 °C. A greater difference (e.g., 60 °C instead of 5 °C) in melting point between the core 202 and the outer layer 204 may help produce a laminate (e.g., unitary structure of film layers bonded together), with improved mechanical and/or physical properties. Without being limited to any mechanism or mode of action, a greater difference in melting point may permit laminating at a temperature that melts the at least one outer layer 204 but does not melt the core 202. When the processing temperature approaches the melting point of the core 202, the core 202 may start to soften and the molecules of the core 202 may lose their orientation, which in turn may degrade the physical and mechanical properties of the resulting laminate 210 as compared to a laminate 210 in which the core 202 has not been melted or softened. The laminate formed where the core was softened may still be suitable for use and be encompassed by the examples disclosed herein.

A difference in melting point between the core 202 and the at least one outer layer 204 of at least about 10 °C may make laminating a set of films 200 together easier. The layers of BOPP film 200 may slide over each other, or adjacent BOPP films 200 may slide over each other when forming the laminate, when the processing temperature is high enough to melt or partially melt the at least one outer layer 204 but not melt the core 202. While the mechanical properties of the laminate are best maintained by not substantially melting the core 202 during production of the laminate sheet, in an alternative example if the core 202 is softened or partially melted during production of the laminate the mechanical properties may be reduced but may still be adequate for further use. The difference in melting point may also make the process of molding a laminate easier because the laminate is rendered malleable by the melting or partial melting of the at least one outer layer 204 and the melting, partial melting, or softening of the core 202.

The at least one outer layer 204 defines an outer surface 206 and an inner surface 208 adjacent to and engaging with the BOPP film 200. The outer surface 206 may be corona treated, which may help provide sufficient wetting and adhesion to the BOPP film 200 for subsequent printing, laminating, or coating of the BOPP film 200. For example, the at least one outer layer 204 may be corona treated on the outer surface 206 for better adhesion to a film immediately adjacent thereto. For example, the outer surfaces of 206 of the outer most film(s) in the first set of films 110 may be corona treated.

The core 202 and at least one outer layer 204 may be coextruded to form the BOPP film 200. In contrast to woven fabrics, in which threads or tapes are woven in two directions (warp and weft) to form a plastic fabric, a BOPP film 200 is produced by simultaneous extrusion of multiple layers. For example, the at least one outer layer 204 and the core 202 are coextruded to produce the BOPP film 200.

Specific BOPP films 200 suitable for use in the first set of BOPP films 110 may include a KXE heat sealable BOPP film (available from TATRAFAN, s.r.o., Slovakia), having PP outer layers and a BOPP core; an ONXE BOPP film (available from TERICHEM, a.s., Slovakia), having PP outer layers and a BOPP core; a KXHSS heat sealable BOPP film (available from TATRAFAN, s.r.o., Slovakia) having polypropylene outer layers and a BOPP core; or the like.

The BOPP film 200 may have a thickness of about 10 µm to about 100 µm, about 10 µm to about 30 µm, about 30 µm to about 50 µm, about 40 µm, about 20 µm, or less than about 40 µm. The BOPP film 200 may have a square weight of about 0.015 g/m² to about 0.04 g/m²., such as about 0.015 g/m² to about 0.020 g/m², about 0.020 g/m² to about 0.030 g/m², about 0.030 g/m² to about 0.040 g/m², about 0.034 g/m² to about 0.037 g/m², or less than 0.040 g/m². The BOPP film 200 may be transparent, translucent, or opaque. For example, the BOPP film 200 (e.g., core 202) may be a translucent or opaque white color. In some examples, the BOPP film 200 may be a color other than white. In some examples only the core layer is colored, whether white of another color.

Various versions of the BOPP film 200 may be utilized in forming laminate 100, such as multiple layers having identical characteristics, multiple layers having different characteristics, or both. Returning to FIG. 1, each of the BOPP films 112, 114, and 118 of the first set of BOPP films 110 may be independently similar or identical to each other in one or more aspects, such as material composition, thickness, or the like. For example, BOPP films 112 and 114 may be identical to each other and BOPP film 118 may differ from BOPP films 112 and 114 in one or more aspects. Similarly, BOPP films 114 and 118 may be identical to each other and BOPP film 112 may differ from BOPP films 114 and 118 in one or more aspects. In some examples, the first set of BOPP films 110 may include 5 BOPP films with two additional BOPP films being located between BOPP film 114 and BOPP film 118. In examples throughout, the BOPP films 114, 118 and the additional BOPP films may include KXE (e.g., KXE-S1, KXE-40, or other KXE films) heat sealable BOPP films, and BOPP film 112 may include an ONXE BOPP film. In such examples, fewer or additional BOPP films may be utilized, such as to provide a selected thickness or weight in the laminate 100. Many combinations of BOPP film numbers, material types, thicknesses, weights, or the like may be utilized to form the first set of BOPP films 110. The outermost BOPP film 112 may include a selected finish on an outermost surface thereof, such as a glossy, mat, or satin finish.

The first set of BOPP films 110 may form the outer surface 102 in the laminate 100. For example, the BOPP film 112 may form the outermost surface 102 of the laminate 100. Accordingly, in some examples, the first set of BOPP films 110 may include at least enough individual BOPP films to provide a selected surface finish to the outer surface of the laminate, such as a smooth finish, despite any underlying layers that have variations in thickness. For example, the weave of a sheet of woven plastic material, such as an SRPP sheet, may introduce texture at the surface of a laminate via print-through unless the first set of BOPP films provides enough polymer material between the woven plastic material and the surface to fill in the variations in thickness of the weave therebelow during lamination. In some examples, suitable amounts of BOPP films in the first set of BOPP films to provide a smooth surface of the laminate may include 3 to 5 BOPP films.

The second set of BOPP films 120 may be similar or identical to the first set of BOPP films 110 and BOPP film 200 in one or more aspects. For example, the second set of BOPP films 120 may each include a core of a biaxially oriented thermoplastic polymer and at least one outer layer of a thermoplastic polymer as disclosed above with respect to the first set of BOPP films 110. In some examples, at least some of the second plurality of BOPP films 120 may not include the at least one outer layer. The second set of BOPP films 120 may include a different number of film layers, thickness(es), material compositions, or the like than the first set of BOPP films 110.

The second set of BOPP films 120 may include one or more BOPP films or at least two BOPP films, such as 1 to 10 BOPP films, 20 to 10 BOPP films, 3 to 6 BOPP films, 5 to 10 BOPP films, less than 10 BOPP films, or less than 5 BOPP films. For example, the second set of BOPP films 120 may include BOPP films 122, 124, and 128.

One or more of the BOPP films 122, 124, and 128 may be independently similar or identical to each other in one or more aspects. For example, BOPP films 122 and 124 may be identical to each other and BOPP film 128 may differ from BOPP films 122 and 124 in one or more aspects. Similarly, BOPP films 124 and 128 may be identical to each other and BOPP film 122 may differ from BOPP films 124 and 128 in one or more aspects. In some examples, the second set of BOPP films 120 may include four BOPP films with an additional BOPP film being located between BOPP film 124 and BOPP film 128. In such examples, the BOPP films 122 and 124 may include KXE heat sealable BOPP films, and the additional BOPP film and BOPP film 128 may include KXHSS heat sealable BOPP films. In some examples, the second set of BOPP films 120 includes BOPP films 122 and 124 comprising KXE heat sealable BOPP films as well as BOPP film 128 and at least one additional BOPP film (disposed between BOPP films 124 and 128) comprising KXHSS heat sealable BOPP films. Many combination of BOPP film numbers, material types, thicknesses, weights, or the like may be utilized to form the second set of BOPP films 120.

In some examples, the second set of BOPP films 120 may have a thickness of 10% to 25% of the total thickness of the laminate 100, such as 12% to 18%, about 12% to about 15%, about 15% to about 20%, less than about 20%, or less than about 18% of the total thickness of the laminate 100.

The second set of BOPP films 120 may form the inner surface 104 of the laminate 100. For example, the BOPP film 128 may form the innermost layer and inner surface 104 of the laminate 100. In some examples, the innermost BOPP film(s) of the second set of BOPP films 120 may include a colorant. For example, one or more of the innermost BOPP film(s) (e.g., 122, 124, or 128) may be colored white. In such examples, the color of the laminate 100 viewed from the outermost surface exhibits a greater color intensity or brightness than examples without white innermost BOPP films.

The laminate 100 includes at least one sheet of woven plastic material, such as an SRPP sheet, disposed between the first set of BOPP films 110 and the second set of BOPP films 120. The at least one sheet of woven plastic material may include one sheet of woven plastic material, two sheets of woven plastic material, three sheets of woven plastic material, four sheets of woven plastic material, at least five sheets of woven plastic material, or less than five sheets of woven plastic material. For example, the at least one sheet of woven plastic material may include the sheet of woven plastic material 130 (e.g., first SRPP layer) and the sheet of woven plastic material 150 (e.g., second SRPP layer). The at least one sheet of woven plastic material includes thermoplastic tapes arranged in a selected weave pattern. The selected weave pattern may be at least partially visible through the first set of BOPP films 110.

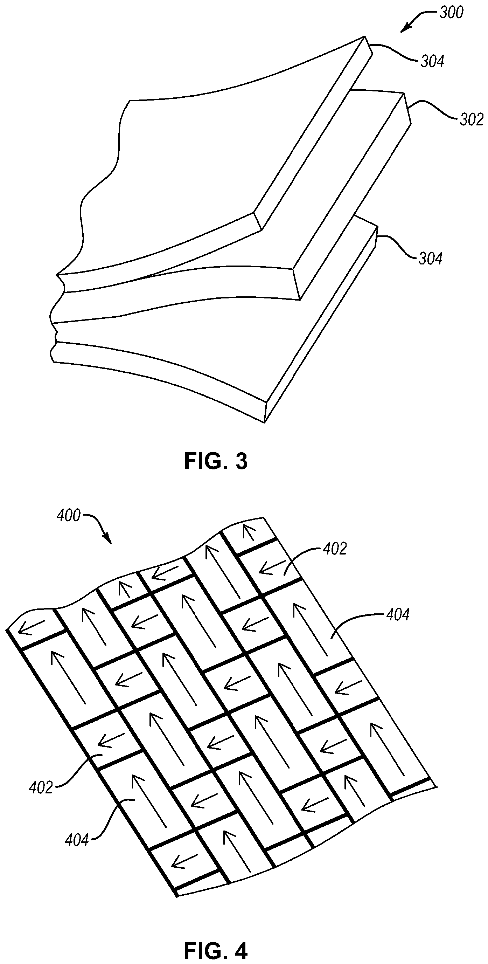

Each sheet of woven plastic material includes one or more longitudinally stretched thermoplastic tapes woven into a sheet. FIG. 3 is an isometric view of a partially fragmented extruded tape 300, according to at least some embodiments. As shown, the tape 300 may include a core layer 302 and at least one outer layer 304. In some examples, the tape 300 may only include the core layer 302. In some examples, the tape 300 may only include at least one outer layer 304 on one side of the core layer 302. The core layer 302 and the at least one outer layer 304 may be provided as separate films and may be combined (e.g., bonded), such as by one or more of coextrusion, heating, or the like to form the tape 300. For example, a stretched polymer forming the core layer 302 may be coextruded together with stretched or unstretched polymer forming the at least one outer layer 304 on both sides of the core layer 302, to form the tape 300.

Thermoplastic polymers suitable for use in the core layer 302 include one or more of polypropylene, polyethylene, polyamide, polyester, polyvinyl alcohol, polycarbonate, polylactic acid, polybutene, acrylonitrile butadiene styrene (ABS), or the like. For example, the core 302 may include a polypropylene homopolymer that is stretched a selected amount. The core 302 may include a copolymer such as a PP/PE copolymer where PE is a minor component (e.g., 5 wt% or less) of the copolymer. Further, the core 302 may include a terpolymer, quaterpolymer, or the like. Polypropylene may be the major component in the polymer forming the core 302.

The core 302 may be stretched longitudinally (e.g., in the machine direction) to, in one example, at least five times the original dimension of the unstretched polymer film (e.g., 8-12, 12-15, less than 20 times, or 10 times). By longitudinally stretching the thermoplastic polymer film to form the core 302, the resulting core 302 has a higher melting temperature than an unstretched polymer film. The longitudinally stretched polymer film forming the core 302 also has greater strength and resiliency than the same unstretched polymer film.

The at least one outer layer 304 is constructed of an oriented or non-oriented heat-sealable thermoplastic polymer, such as any of the thermoplastic polymers disclosed herein. In some examples, the outer layer 304 is constructed of a homopolymer, such as substantially only PP. In some examples, the outer layer 304 includes a copolymer of PP and PE. PE may constitute up to about 5% of the copolymer. In some examples, the outer layer 304 is constructed of a terpolymer. The compositional match between the material in the core 302 and the at least one outer layer 304 provides strong bonding between the respective layers in the tape 300.

The core 302 and the at least one outer layer 304 of the tape 300 include compatible or complementary polymers, such that the core 302 and the outer layer 304 may be coextruded. For example, the core 302 and outer layer 304 may be constructed of the same thermoplastic polymer. The core 302 and the outer layer 304 may differ in orientation (e.g., stretching) of the polymer film in the respective layers. In some examples, the core 302 is constructed of a longitudinally stretched polypropylene homopolymer and the outer layer 304 is constructed of an unstretched polypropylene homopolymer. In some examples, the core 302 is constructed of a longitudinally stretched polypropylene homopolymer and the outer layer 304 is constructed of an unstretched copolymer of polypropylene and polyethylene. Any of the materials of the core 302 or at least one outer layer 304 disclosed herein may be formed at least partially of recycled material(s), such as at least 10% (e.g., at least 75% or at least 90%) recycled PP.

The core 302 has higher a melting point than the outer layer 304. For example, the core 302 may have a melting point of about 150 °C or more, such as about 150 °C to about 190 °C, or about 170 °C. The outer layer 304 may have a melting point of about 110 °C to about 135 °C, such as about 130 °C or less. The difference between the melting point of the core 302 and the melting point of the outer layer 304 may be from about 10 °C to about 60 °C, from about 10 °C to about 50 °C, from about 10 °C to about 40 °C, from about 10 °C to about 30 °C, or from about 10 °C to about 20 °C. A greater difference (e.g., 60 °C instead of 5 °C) in melting point between the core 302 and the outer layer 304 may help produce a laminate (e.g., unitary structure of film layers bonded together) with improved mechanical and/or physical properties. Without being limited to any mechanism or mode of action, a greater difference in melting point may permit laminating at a temperature that melts the outer layer 304 but does not melt the core 302. When the processing temperature approaches the melting point of the core 302, the core 302 may start to soften and the molecules of the core 302 may lose their orientation, which in turn may degrade the physical and mechanical properties of the resulting tape 300 as compared to a tape 300 in which the core 302 has not been melted or softened.

In some examples, the tape 300 may not include the at least one outer layer 304. In such examples, the core 304 having a higher melting point than the absent at least one outer layer 302 may not bond readily to layers surrounding the tape 300 or sheets formed therefrom (e.g., woven plastic material 400) because of melting temperature mismatch therebetween. Accordingly, while tapes 300 without the at least one outer layer 304 may be used, tapes 300 having the at least one outer layer 304 provide for stronger bonds to the BOPP films and matrix layers disclosed herein.

The tape 300 may be transparent, translucent, or opaque. The tape 300 may include a colorant in one or more of the core 302 or the at least one outer layer 304. For example, a polypropylene film having a selected color may be utilized as the at least one outer layer 304 to provide a color to the tape 300 and to the resulting at least one sheet of woven plastic material 130 or 150 (FIG. 1). The colorant may be provided in the tape 300 by pigment(s) added to the polymer(s) therein, such as white pigment in a polypropylene homopolymer. The colorant may allow for transparency, translucence, or opaqueness in the tape 300. Accordingly, the at least one sheet of woven plastic material containing the colored tape 300 includes a colorant. The colored tape 300 may be visible through the entire laminate from an outer surface thereof.

The tape 300 may include one or more fibers therein, such as in the core 302. For example, the warp and weft of the resulting sheet of woven plastic material may independently include one or more of aramid fibers, glass fibers, carbon fibers, or the like.

Two or more tapes 300 are woven together to form a woven plastic material or fabric (e.g., SRPP layer). FIG. 4 is an isometric cutaway view of a sheet of woven plastic material 400, according to at least some embodiments. As depicted, the sheet of woven plastic material 400 is formed from polymer tapes 402 and 404 woven in a selected weave pattern. The polymer tapes may be similar or identical to the tape 300 in one or more aspects. The sheet of woven plastic material 400 may be in the form an SRPP sheet.

In some examples, one or more of the warp or the weft in the sheet of woven plastic material may be made from tape having a cumulative lateral width of at least 110% of the dimension(s) (e.g., length or width) of the sheet of woven plastic material respectively, such as at least 120%, at least 140%, at least 150%, no more than 200%, or no more than 160% of the dimension(s) of the sheet of woven plastic material. In some examples, the width of warp or weft may be at least 1 mm, such as 1 mm to 5 mm, 2 mm to 3mm, 2.5 mm, or less than 5 mm. The overlapping tapes provide greater visibility of the weave in the laminate 100, and may also reduce the appearance of gaps or voids between the tapes.

The selected weave pattern may include a twill weave (e.g., 2 x 2), plain weave, satin weave, rib weave, broken weave, broken twill weave, 3 x 1 weave, or variations of any of the foregoing. In some examples, the weave pattern may provide a three-dimensional weave pattern designed to provide a selected texture or appearance of texture to the laminate 100. In some examples, compound weave pattern may be utilized, such as for example a weave pattern for manufacturing multi-layer woven textiles, also referred to as a three dimensional weave pattern. In compound weave patterns, multiple layers of the warp and/or weft yarns may be used. In some examples, a three dimensional weave pattern may include three or more yarn systems corresponding to the multiple layers of the warp and or weft yarns. In other examples, one or more tapes may be twisted together to form one of the weft or warp. Such twisting may provide three dimensional characteristics to the resulting woven plastic material. Three dimensional patterns may be formed in the woven plastic material by utilizing twisted tapes for one or more of the warp or weft, in any selected pattern(s) thereof. .

The at least one sheet of woven plastic material may include one or more colorant therein. For example, one or both of the (warp and the weft) tapes 404 and 402 may have a selected colorant therein. In some examples, the warp and the weft of a woven plastic material may include different colorants. In some examples, the weft may include different colorants across a sheet of woven plastic material, such as alternating or random colorants in every other tape of the weft, every third tape, every fourth tape, every fifth tape of the weft or the like. The warp may have different colorants throughout a sheet of woven plastic material, such as every other tape in the warp, every third tape, every fourth tape, every fifth tape or the warp or the like. One or both of the warp or the weft may include one or more blocks of identically colored tapes, such as at least 5 consecutive tapes of the warp or the weft. Accordingly, the at least one sheet of woven plastic material 400, especially, nearest an outer surface of the laminate 100 may provide at least a portion of a selected aesthetic appearance at the surface of the laminate 100.

In some examples, one or more of the warp or the weft may include fibers therein, such as aramid fibers, carbon fibers, glass fibers, or the like. The fibers may be located in every other tape of the warp or weft, every third tape, every fourth tape, every fifth tape of the warp or weft in the sheet of woven plastic material. In such examples, at least some of the polypropylene tape in the warps or wefts may be replaced by polymer tape or fibers made of or having one or more of carbon, aramid, or glass fibers therein (e.g., high performance polymer fibers or tapes). Such tapes may include an Endumax^{®} (ultrahigh-molecular-weight polyethylene) hybrid or composite tape (available from Teijin Aramid). In examples, the polymer fibers may be intralayer such as to be within the woven fabric sheets. In such examples, 1 out of 4 tapes may be a high performance polymer fiber or tape, and in further examples the warp tapes may include a high performance polymer fiber or tape. Alternatively, the high performance polymer fibers or tapes may be included in, or form the entirety of, a woven fabric sheet and form an additional sheet or sheets within the lamina layup. In such examples, preferred tapes may include highly stretched polymer tapes having fibers therein to aid in recycling at the end of life.

The tapes 402 and 404 may be similar or identical to the tape 300 in one or more aspects. For example, the tapes 402 and 404 may be coextruded with the core layer therein having a higher melting point than the at least one outer layer, such as due to the core layer being stretched in a longitudinal (e.g., machine direction) while the at least one outer layer is not stretched.

The tapes 402 and 404 are woven in two directions to form a woven plastic fabric. As depicted, the tape 402 is depicted as a weft (e.g., tape extending transverse to the longitudinal axis of the sheet of woven plastic material 400) and the tape 404 is depicted as the warp (e.g., tape extending along the longitudinal axis of the sheet of woven plastic material 400). By having longitudinally stretched core layers in the respective tapes 402 and 404 extending perpendicular to each other in the warp and the weft, the resulting at least one sheet of woven plastic material 400 includes a greater strength and resiliency than a woven fabric without the stretched cores in the tapes therein.

Suitable sheets of woven plastic material 400 include Torodon^{™} SRPP fabric (available from Don & Low of Forfar, Scotland, UK), Tegris^{®} fabric (available from Milliken Textiles of Ghent, Belgium), or the like.

The at least one sheet of woven plastic material 400 has a thickness of at least 100 µm, such as about 100 µm to about 250 µm, about 100 µm to about 150 µm, about 130 µm to about 180 µm, about 50 µm to about 200 µm, less than about 200 µm, or about 160 µm. In some examples, the at least one sheet of woven plastic material 400 has a thickness of less than about 10% of the total thickness of the laminate 100 (FIG. 1) or the lay-up for forming the same. For example, the at least one sheet of woven plastic material 400, individually, may have a thickness of about 1% to 10% of the laminate or lay-up for forming the same. The woven plastic material 130 or 150, where at least two sheets are used in the laminate, may be the same as each other or different from each other. For example, the weave used in one woven plastic material sheet may be different than the weave used in another plastic material sheet. In another example, the amount of stretching of the respective core layers 302 in one woven plastic material sheet may be different than in the other plastic material sheet. The difference in the woven plastic material sheets 130 and 150 may result in improved strength and resilience characteristics.

The matrix layers may be utilized to provide a strong bond between, and prevent delamination between, the at least one sheet of woven plastic material 130 or 150 and adjacent BOPP films.

In some examples, the at least one woven plastic material may include one or more polymer films disposed on (e.g., over) the weave of tapes 404 and 402.

Returning to FIG. 1, the laminate 100 includes at least one matrix layer 140 or 142 disposed on one side, such as a top or outer facing side, of one or more of the at least one sheet of woven plastic material 130 or 150, respectively. In some examples, the at least one matrix layer 140 or 142 is only on a top or outer facing surface side of the at least one sheet of woven plastic material 130 or 150. The laminate may further include at least one matrix layer 141 or 143 disposed on an opposite side, such as a bottom or inner facing surface side, of one or more of the at least one sheet of woven plastic material 130 or 140. For example, the at least one matrix layer may include (first) matrix layer 140 disposed on the top side of the first sheet of woven plastic material 130, (second) matrix layer 141 disposed on a bottom side of the first sheet of woven plastic material 130, and (third) matrix layer 142 disposed on a top side of the second sheet of woven plastic material 150. In some examples, (fourth) matrix layer 143 is disposed on a bottom side of the second SRPP layer 150.

The at least one matrix layer is formulated to provide additional matrix material and enhance adhesion between the BOPP films and the woven plastic material. The at least one matrix layer is formulated to bond or adhere to the at least one sheet of woven plastic material 130 or 150 and BOPP films (e.g., first set of BOPP films, second set of BOPP films, or third set of BOPP films). The at least one matrix layer 140-143 may be provided in the form of a layer of film, or in some examples may be more than a single layer of film. The at least one matrix layer 140-143 may include an adhesive or material configured to bond to films or layers in contact therewith. For example, the at least one matrix layer 140-143 may include a polypropylene layer, a maleic anhydride-grafted polypropylene (MAPP) layer or other grafted polypropylene layer, or a polypropylene/polyethylene copolymer layer. In some examples, the at least one matrix layer may be formulated to melt completely, partially, or not at all responsive to heat applied thereto such as during lamination. One or more portions of the at least one matrix layer may be composed to melt (e.g., outer layers (if melted partially) or entire film (e.g., if melted completely)) at a melting temperature in the same range as the melting temperature of the outer layers of the woven plastic material 130 and outer layer of the BOPP films. Such melting temperatures may be about 110 °C to 140 °C, or about 130 °C as disclosed herein. MAPP layers are particularly effective at bonding to BOPP films and woven plastic materials (e.g., SRPP fabrics). Suitable MAPP material may include Rayotec MAPP 020 NT (available from AMCOR of Zurich, Switzerland), Lamiten^{®} film (available from Chemosvit Folie of Czechia), or the like. Polypropylene film layers suitable for use as the at least one matrix layer may include blown PP films or cast PP films, such as polypropylene film from NITTO ADVANCED FILM of Gronau, Germany. The at least one matrix film may include one or more layers therein. For example, a MAPP film may include up to five layers of MAPP material therein.

Any of the at least one matrix layers 140-143 may include a colorant therein. For example, the at least one matrix layer 140 may include a substantially transparent or translucent colorant therein. In such examples, the at least one matrix layer(s) may modify the aesthetic appearance or coloration of the laminate, such as by augmenting the appearance of the colorant in the at least one woven plastic material. In some examples, the at least one matrix layer 140 may include a substantially opaque colorant therein. In such examples, the at least one matrix layer 140 may include areas without the colorant therein, such as to provide cut-outs through which the underlying at least one woven plastic material is visible. The cut-outs may provide a selected pattern (e.g., checkerboard), design, logo, text, or the like to the appearance of the laminate 100 and luggage shells formed therefrom.

Each of the at least one matrix layer(s) 140-143, may be at least about 10 µm thick, such as about 10 µm to about 50 µm, about 10 µm to about 30 µm, about 20 µm to about 40 µm, about 30 µm to about 50 µm, less than about 50 µm, or less than about 30 µm. In some examples, the total thickness of all of at least one matrix layer 140-143 may be less than about 10% of a total thickness of a laminate or lay-up for forming the same.

Returning to FIG. 1, the laminate 100 may include the third set of BOPP films 180. The third set of BOPP films 180 may be disposed between the first set of BOPP films 110 and the second set of BOPP films 120. For example, the third set of BOPP films 180 may be disposed between the at least one sheet of woven plastic material 130 and the at least one sheet of woven plastic material 150. In such examples, the at least one sheet of woven plastic material 130 (e.g., first SRPP layer) is disposed between the first set of BOPP films 110 and the third set of BOPP films 180, and the at least one sheet of woven plastic material 150 (e.g., second SRPP layer) is disposed between the third set of BOPP films 180 and the second set of BOPP films 120.

The third set of BOPP films 180 may be similar or identical to the first set of BOPP films 110 and BOPP film 200 in one or more aspects. For example, the third set of BOPP films 180 may each include a core of a biaxially oriented thermoplastic polymer and at least one outer layer of a thermoplastic polymer as disclosed above with respect to the first set of BOPP films 110 and the BOPP film 200. In some examples, at least some of the third plurality of BOPP films 180 may not include the at least one outer layer. The third set of BOPP films 180 may include a different number of film layers, thickness(es), material compositions, or the like than one or more of the first set of BOPP films 110 or the second set of BOPP films 120.

The third set of BOPP films 180 may include one or more BOPP films or at least two BOPP films such as 1 to 20 BOPP films, 1 to 7 BOPP films, 7 to 14 BOPP films, 14 to 22 BOPP films, less than 20 BOPP films, less than 15 BOPP films, 11 BOPP films, or 9 BOPP films. For example, the third set of BOPP films 180 may include BOPP films 182, 184, and 188.

One or more of the BOPP films 182, 184, and 188 may be independently similar or identical to each other in one or more aspects. For example, BOPP films 182 and 184 may be identical to each other and BOPP film 188 may differ from BOPP films 182 and 184 in one or more aspects. Similarly, BOPP films 184 and 188 may be identical to each other and BOPP film 182 may differ from BOPP films 184 and 188 in one or more aspects. In some examples, the third set of BOPP films 180 may include seven BOPP films total with four additional BOPP films being located between BOPP film 184 and BOPP film 188. In some examples, the third set of BOPP films 180 may include nine total BOPP films with six additional BOPP films being located between BOPP film 184 and BOPP film 188. In some examples, the third set of BOPP films 180 may include eleven total BOPP films with eight additional BOPP films being located between BOPP film 184 and BOPP film 188. In some examples, the third set of BOPP films 180 may include thirteen total BOPP films with ten additional BOPP films being located between BOPP film 184 and BOPP film 188. In some examples, the third set of BOPP films 180 may include fourteen total BOPP films with eleven additional BOPP films being located between BOPP film 184 and BOPP film 188. In such examples, the BOPP films 182-188 may include a KXE heat sealable BOPP film and the additional BOPP films and BOPP film 188 may include KXE heat sealable BOPP films. Any combination of BOPP film numbers, material types, thicknesses, weights, or the like may be utilized to form the third set of BOPP films 180.

In some examples, the third set of BOPP films 180 may have a thickness of about 25% to about 55% of the total thickness of the laminate 100, about 25% to about 35%, about 30% to about 40%, about 35% to about 45%, less than about 40%, or less than about 35% of the total thickness of the laminate 100.

It should be recognized that the laminate 100 may include more of fewer layers than those disclosed in FIG. 1. For example, more or fewer BOPP film, sheets of woven plastic material, or matrix layers may be utilized than is illustrated in FIG. 1. While not shown in FIG. 1, in some examples, the laminate 100 may include one or more additional layers. For example, a carbon fiber containing layer, an aramid fiber containing layer, or a glass fiber containing layer may be disposed in the laminate as an interlayer. More or fewer sheets of woven plastic material than those shown in FIG. 1 may be utilized.

In some examples, the laminate may include more than two sheets of woven plastic material in combination with the first set of BOPP films 110, the second set of BOPP films 120, and the third set of BOPP films 180 disposed between the first set of BOPP films 110 and the second set of BOPP films 120. In such examples, the at least one sheet of woven plastic material may include a first sheet of woven plastic material 130 disposed between the first set of BOPP films 110 and the third set of BOPP films 180, a second sheet of woven plastic material 150 disposed between the second set of BOPP films 120 and the third set of BOPP films 180, a third sheet of woven plastic material 130 disposed between the first sheet of woven plastic material 130 and the second sheet of woven plastic material 150 (e.g., next to the first sheet of woven plastic material 130), and a fourth sheet of woven plastic material 150 disposed between the third sheet of woven plastic material 130 and the second sheet of woven plastic material 150 (e.g., next to the second sheet of woven plastic material 130). In such examples, the at least one matrix layer may include (first) matrix layer 140 disposed on the top side of the first sheet of woven plastic material 130, (second) matrix layer 142 disposed on a top side of the second sheet of woven plastic material, a third matrix layer disposed on a top side of the third sheet of woven plastic material 130 and a fourth matrix layer disposed on a top side of the fourth sheet of woven plastic material 150. In some examples, only the first and fourth sheets of woven plastic material 130 and 150 may include matrix layers thereon, respectively, such as only on a top side thereof. In some examples, the second and third sheets of woven plastic material 130 and 150 may include matrix layers on a bottom side thereof. In some examples, all of the sheets of woven plastic material 130 and 150 may include matrix layers thereon, respectively, such as one or more of the top sides or bottom sides thereof.

In some examples, the laminate 100 may include at least one interlayer disposed between, or in place of, at least one layer of woven plastic material 130. The at least one interlayer may include a layer of woven or non-woven material having aramid, carbon, or glass fibers therein. Suitable interlayers can include an Endumax^{®} (ultra-high-molecular-weight polyethylene) hybrid or composite material (available from Teijin Aramid).

The lay-up used to form the laminate 100 or the laminate 100 may have selected dimensions, such as a one or more of a width (e.g., in the transverse direction) or length (e.g., in the machine direction) of at least 30 cm, such as 30 cm to 150 cm, 50 cm to 80 cm, 70 cm to 100 cm, 100 cm to 125 cm, 120 cm to 150 cm, 30 cm to 60 cm, 60 cm to 80 cm, 55 cm to 75 cm, 69 cm, 81 cm, 86 cm, 95 cm, 96 cm, 125 cm, less than 125 cm, less than 100 cm, or any combination of the foregoing.

In some examples, the individual layers (e.g., sheets, films, layers) may be oriented in the same direction, such as by having the machine direction of each layer aligned in a single direction. In such examples, none of the individual layers may be oriented at an angle, such as orthogonally, to any of the other layers of the laminate with respect to the machine directions of the individual layers. Such a configuration limits or reduces stretching of individual layers in a transverse direction of the individual layer. In other examples, the individual layers (e.g., sheets, films, layers) may be oriented at an angle to an adjacent layer (above or below).

In some examples, a textile or fabric layer may be disposed on the inner surface 104 of the laminate 100 for a luggage shell formation process, such as for use as a lining in a finished luggage shell. The textile or fabric layer may be knitted or made of a material composited to have at least some elasticity. In such examples, the additional layer may be coextruded with the other layers during the formation process to form the laminate 100, or may be bonded to the inner surface 104 after lamination. The latter example may prevent lamination defects introduced by the textile layer.

In some examples, and starting from an outmost layer, the laminate 100 may include the first set of BOPP films beginning with an ONXE BOPP film followed by four KXE BOPP films. A first matrix layer (e.g., PP or MAPP film) disposed on at least one first sheet of woven plastic material (e.g., Torodon^{™} fabric) may be positioned below the first set of BOPP films. A second matrix layer (e.g., PP or MAPP film) may be disposed under the at least one first sheet of woven plastic material. A second set of BOPP films positioned below the second matrix layer may include 11 BOPP films (e.g., KXE films) and a third matrix layer (e.g., PP or MAPP film) may be disposed under the second set of BOPP films. At least one second sheet of woven plastic material (e.g., Torodon^{™} fabric) may be disposed under the third matrix layer. A third set of BOPP films may be disposed under the at least one second sheet of woven plastic material, with the third set of BOPP films including four BOPP films (e.g., two KXE BOPP films on two KXHSS BOPP films). An optional at fourth matrix layer (e.g., PP or MAPP) may be disposed between the third set of BOPP films and the at least one second sheet of woven plastic material.

In the above example, the third set of BOPP films may include three KXE BOPP films with no KXHSS BOPP films being present. In such examples, the laminate 100 may include a bottom matrix layer positioned below the third set of BOPP films, such as a PP or MAPP matrix layer. Such a bottom matrix layer aids in bonding further layers (e.g., linings) to the laminate 100. While not depicted, the bottom matrix layer may be present in any of the laminates disclosed herein.

It should be recognized that the laminate 100 depicted in FIG. 1 can also be a lay-up comprising the same layers described with respect to FIG. 1, prior to bonding the individual layers together.

The laminate 100 may be formed by laminating a set of films (e.g., 110, 130, 140-143, 180, 150, 120) under selected pressure, temperature, and/or time conditions. The laminate 100 maybe formed in a laminating machine, such as an isobaric press or an isothermal press. Pressure applicators may include opposing oil cushions spaced apart by a gap. As used herein, "bar" generally but not exclusively refers to a surface pressure generated by a press. As used herein, "kN/m" generally but not exclusively refers to a line pressure generated by a press. In the examples disclosed herein, an isobaric press has demonstrated particular effectiveness at significantly reducing or eliminating air inclusions that are typically present in samples made using an isochoric press.

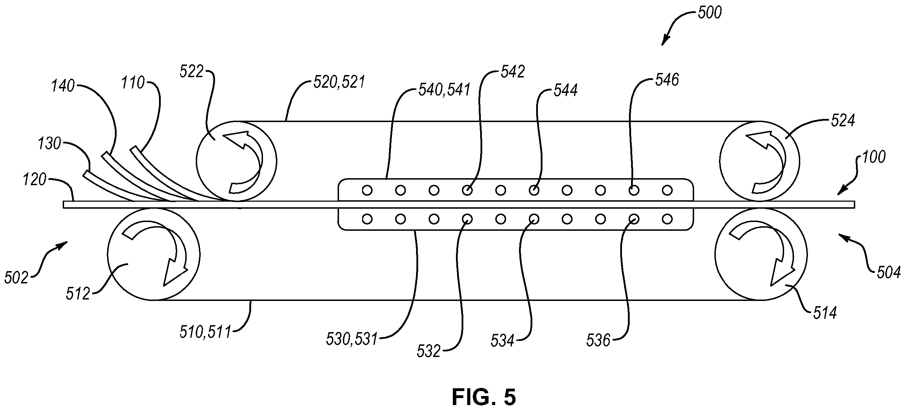

FIG. 5 is a schematic illustration of a double belt press 500, according to at least some embodiments. The double belt press 500 includes a lower press assembly 510 and an upper press assembly 520, between which a lay-up may be pressed, heated, and bonded to form a laminate. The double belt press may include an isobaric press or an isothermal press.

The lower press assembly 510 includes a lower belt 511 and a lower pressure module 530 including a lower pressure body 531 having a set of thermal elements 532, 534, and 536 in thermal connection therewith. The lower pressure module 530 may be adjustable to bias the lower belt 511 toward or away from the upper press assembly 520.

The thermal elements 532, 534, and 536 allow for a combination of heating and/or cooling along the longitudinal length of the lower pressure module 530 to form a laminate thereon.

The upper press assembly 520 includes an upper belt 521 and an upper pressure module 540 including an upper pressure body 541 having a set of thermal elements 542, 544, and 546.

The thermal elements 542, 544, and 546 allow for a of heating and/or cooling along the longitudinal length of the lower pressure module 530 to form a laminate thereon.

One or more temperature and/or pressure applications may be used in the formation of the laminates disclosed herein. For example, one or more temperature profiles may be used in the double belt press 500 along the longitudinal length of the belts therein. In some examples, one or more of the temperature or pressure applied by the double belt press may be constant along the longitudinal length thereof. The pressure P₁ may be less than about 100 bar, such as about 10 to about 90 bar, about 10 to about 30 bar, about 25 bar to about 70 bar, about 60 to about 90 bar, about 30 to about 80 bar, about 60 to about 80 bar, about 50 to about 70 bar, or less than about 80 bar. In one example, the pressure is constant during the process, in some examples during any heating and cooling stages. The pressure may be between approximately 30 and approximately 80 bar, and preferably approximately 70 bar.

A lay-up according to the individual films of layers of the laminate 100 is heated to a selected temperature and pressed at a selected pressure in the double belt press 500 to form the laminate 100. The laminate 100 may be further processed to form a luggage shell or the like, such as a container shell or panel. For example, the laminate may be used in a molding apparatus to form the luggage shell or the like therefrom.

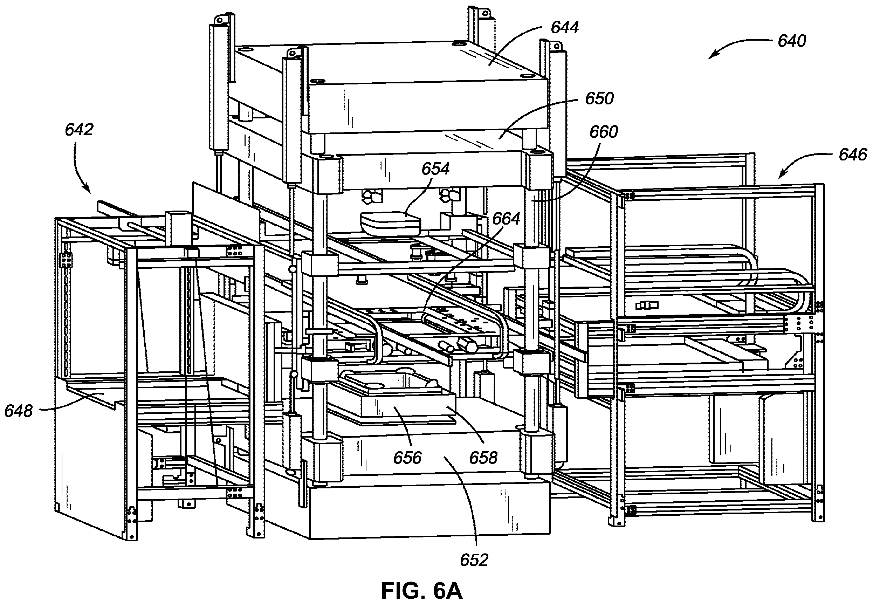

FIG. 6A is an isometric view of a molding apparatus 640, according to at least some embodiments. The molding apparatus 640 may include a lining dispenser 642, a press 644, and a heater array 646. In some examples, the lining dispenser 642 receives and distributes textile sheets, such as mesh, knit, woven, or non-woven fabric cloths, for molding with a sheet of laminate 100 (FIG. 1). The textile sheet may serve as a lining of an interior of a luggage shell produced in the molding apparatus 640. The textile sheets may be received and stored in a tray 648 before being distributed to sheets of laminate 100.

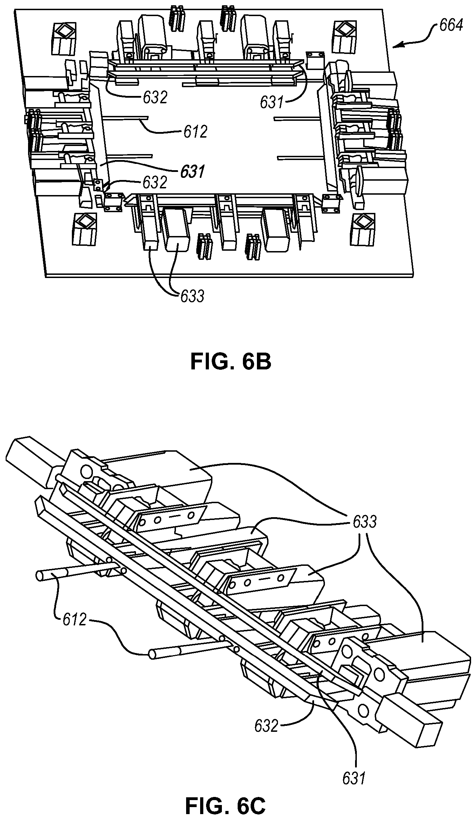

The press 644 includes an upper table 650 and a lower table 652. The upper table 650 may support an upper mold, which may be a male mold 654 of a deep drawing tool 656. In FIG. 6, a portion of the upper table 650 is removed to more clearly show the male mold 654. The lower table 652 may support a lower mold, which may be a female mold 658 of the deep drawing tool 656. The tables 650, 652 are movable relative to each other. The molds 654, 658 are complimentary to each other such that one mold, for example the male mold 654, fits at least partially inside the other mold, for example the female mold 658. Some amount of clearance between the molds may be provided to allow for the thickness of the molded product. The molds 654, and 658 may be configured to create a luggage shell, container shell, panel, or the like.

The press 644 further includes a sheet gripping rack 664. The rack 664 is configured to controllably hold each laminate 100 sheet in a position between the male mold 654 and the female mold 658. The rack 664 may also be configured to stretch or apply tension to the laminate 100 sheets. The application of a tension or pressure may help further consolidate the films of the laminate 100 together. The tension or pressure applied to the laminate 100 may be less than about 5 bar, such as about 0.5 to about 4 bar, about 0.5 to about 3 bar, about 0.5 to about 2 bar, or about 1.5 to about 2 bar.

FIG. 6B is a perspective view of sheet gripping rack 664, according to an embodiment. FIG. 6C is a perspective view of gripping bars 665 of the gripping rack 664, according to an embodiment. As shown in FIG. 6B, the gripping rack 664 may include upper and lower gripping bars 631 and 632 for gripping the laminate material or luggage shells, support rods 612 for supporting the lay-up or laminate material, and one or more jaw operating drive units 633. The jaw operating drive unit 633 which drive the upper and lower gripping bars 631, 632 (or jaws) in response to a respective process control via a linkage mechanism, for example a toggle lever mechanism, may operate on an electrical, pneumatical, or hydraulic basis.

Accordingly, the sheet gripping rack 664 is configured to support and grip the laminate material or formed luggage shells, such as prior to, during, and after application of pressure on the laminate material. The sheet gripping rack 664 is also configured to apply a selected amount of tension to the laminate material (e.g., sheet) or luggage shell during processing in the press 644. In some examples, tension may not be applied and the sheet gripping rack 664 merely holds the laminate material.

Returning to FIG. 6A, the sheet of laminate 100 may be introduced to the press 644 from a sheet supply behind (as viewed in FIG. 6A) the press 644. The laminate 100 is held between the male mold 654 and the female mold 658 by the sheet gripping rack 664. For example, the top and/or bottom sides of the laminate may be heated, such as while the laminate is gripped and/or stretched by the sheet gripping rack 664.

The heater array 646 may heat the laminate 100 sheet while it is being held between the male and female molds 654, 658. The laminate 100 (or lay-up) may be heated to a temperature high enough to melt or partially melt, or soften, one or more of the outer layer 204, the core 202, the matrix layer 140-143, or the at least one sheet of woven plastic material 130 or 150 (FIG. 1). The laminate 100 may be pre-heated and/or heated to a temperature of about 40 °C to about 190 °C, such as about 40 °C to about 90 °C, about 40 °C to about 70°C, about 70°C to about 110°C, about 110 °C to about 190 °C, about 125 °C to about 150 °C, about 135 °C to about 160 °C, or about 150 °C to about 190 °C, less than about 190°C, or less than about 120°C. In some examples, it may be particularly helpful to preheat at a temperature below the shrinking temperature of the material(s) in the laminate 100 if the laminate 100 is not clamped or otherwise held during preheating. For example, the pre-heating temperature may be approximately 50-to 60 °C.

The press 644 is configured to cause the molds 654, 658 to come together, or close, quickly, which may help reduce the number of wrinkles produced in the corner portions of a deep drawn article, such as a luggage shell or the like. The molds 654, 658 may remain in the closed position for about 15-45 seconds, about 15-30 seconds, about 30-45 seconds, about 20-35 seconds, about 30-45 seconds, less than about 1 minute, less than about 40 seconds, or about 30 seconds.

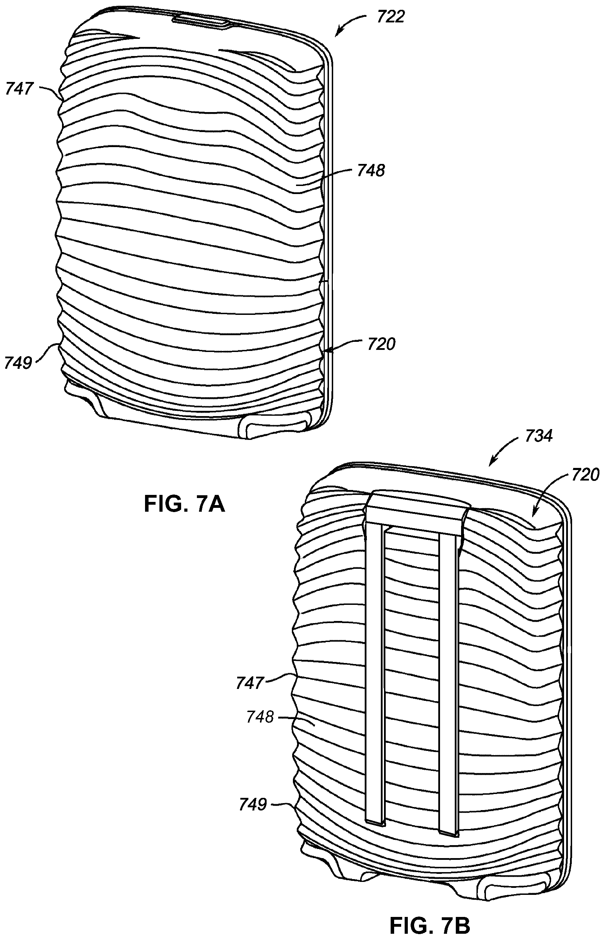

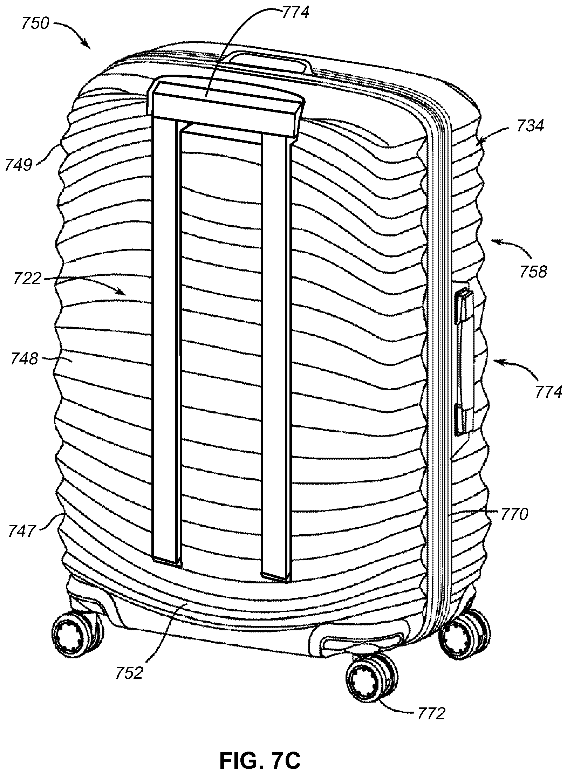

The molding apparatus 640 may output a luggage shell or the like comprising the laminate 100 (FIG. 1). FIG. 7A is a front isometric view of a lid shell 722 of luggage shell 720, according to at least some embodiments. FIG. 7B is a rear isometric view of a base shell 734 or the luggage shell 720, which together form a luggage case 750 (See FIG. 7C), according to at least some embodiments. The luggage shell 720, such as a suitcase shell, may be constructed of the laminate 100 disclosed herein. The luggage shell 720 may be in the form of a lid shell 722 (FIG. 7A) or a base shell 734 (FIG. 7B).

Any one or more of the sides may include surface features 748. The features 748 may be concave areas, such as grooves 747, and convex areas, such as ribs 749. Aside from being aesthetically pleasing, the features 748 may provide stiffness or resistance to bending or distortional forces exerted against the shell(s) 720, 734.

One or both of the lid shell 722 and the base shell 734 may be deep drawn such that the depth of the lid shell 722 or the base shell 734 is quite large relative to its length or width.

Any luggage shell described herein may be used to form the body of a luggage case, such as a hard-sided luggage case. FIG. 7C is an isometric view of a hard sided luggage case 750, according to at least one embodiment. The hard sided luggage case 750 is defined by lid shell 722 and base shell 734 operably coupled together to form a housing 752 having by an exterior layer. Either or both of the lid shell 722 and base shell 734 may be produced by any aforementioned method.

The luggage case 750 may also include a closure mechanism, such as a zipper, and defines a line of closure 770, which divides the luggage case 750 into the lid shell 722 and the base shell 734. A hinge (not shown) for pivotally connecting the lid shell 722 and base shell 734 together is positioned along the line of closure 770. Closure mechanisms may include a latch, buttons, straps, or the like.

The luggage case 750 also may include two or more wheels 772, one or more carry handles, and an extendable pull handle (not shown).

Luggage cases with different surface features and aesthetic appearances may be made with the laminates disclosed herein. For example, luggage cases with substantially planar surfaces may be made with the laminate 100.

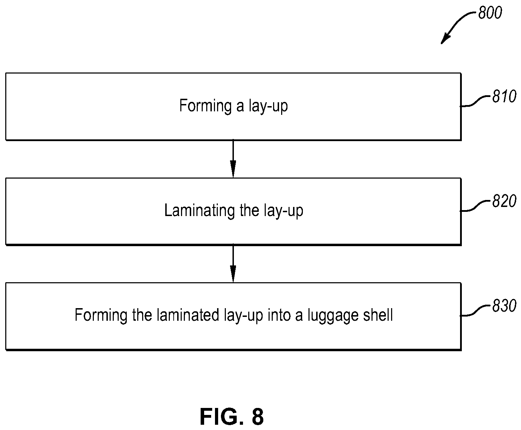

FIG. 8 is a flow diagram of a method 800 for making a luggage shell, according to at least some embodiments. The method 800 includes act 810 of forming a lay-up; an act 820 of laminating the lay-up at a constant pressure in a press; and an act 830 of forming the laminated lay-up into a luggage shell. The method 800 may include more or fewer acts than the acts 810-830. For example, any of the acts 810-830 may be broken into a set of smaller acts. In some examples, the method 800 may include assembling the luggage shell into luggage.

The act 810 of forming a lay-up may include forming a lay-up according to any of the laminates disclosed herein. For example, the lay-up may include one or more of a first set of BOPP films, a second set of BOPP films, a third set of BOPP films, at least one sheet of woven plastic material, or at least one matrix layer, as disclosed herein. Forming a lay-up may include arranging the film layers in any of the sequences disclosed herein. For example, forming a lay-up may include combining the individual film layers into a lay-up by feeding the films from rolls of each in a continuous or batch feed process, such as using a double belt press. The lay-up may have any of the properties of the lay-ups or laminates disclosed herein, such as composition(s), thickness(es), melting point(s), or the like.

The act 820 of laminating the lay-up at a uniform pressure in a press may include subjecting the lay-up to a selected pressure(s) or temperature(s), for any durations, in an isobaric double belt press. For example, the pressure of 10 bar to about 90 bar (e.g., 30 bar to about 70 bar) may be applied while at least a first temperature of 90 °C to about 180 °C is applied to cause one or more components of the lay-up to at least partially melt or soften. Laminating the lay-up at a uniform pressure may further include cooling the laminate to a second temperature that is less than the first temperature (e.g., to ambient temperature) to allow the film layers in the lay-up to cool and bond to form the laminate 100.

Laminating the lay-up at a uniform pressure may include feeding the lay-up into the isobaric press at a selected feed rate, such as any of the feed rates disclosed herein. Laminating the lay-up may include utilizing the isobaric press in any way disclosed herein to form the laminate 100 (FIG. 1).

The act 830 of forming the laminated lay-up into a luggage shell using a plug cavity mold may include feeding any of the laminates disclosed herein into the molding apparatus 640 (FIG. 6). Forming the laminated lay-up into a luggage shell using a plug cavity mold may include utilizing the molding apparatus in any manner disclosed herein to form the luggage shell. For example, forming the laminated lay-up into a luggage shell using a plug cavity mold may include using a sheet gripping rack to hold and or tension the laminate, heating the laminate, or pressing the laminate in the mold cavity at any of the pressures disclosed herein. The plug cavity mold includes a deep drawing mold with male and female mold halves.

Forming the laminated lay-up into a luggage shell may include using another molding or forming technique, such as water pressure molding, extrusion, manual manipulation, or the like.

Forming the laminated luggage shell may further include using the luggage shell to form luggage, such as wheeled luggage. The wheeled luggage may have one or more wheels, one or more handles 774, one or more extendable handles 774, at least one closure mechanism (e.g., zippers, clips, straps, buttons). In such examples, using the luggage shell to form luggage may include forming any of the luggage disclosed herein, such as by assembling opposing luggage shells; attaching one or closure mechanisms; attaching the set of wheels; attaching the one or more hinges; or attaching the one or more straps, extendable handles, or the like.

The laminates having the sheets of woven plastic material disclosed herein provide excellent physical properties, such as stiffness, tensile strength, strain to failure, and a high bonding strength in a relatively thin configuration compared to similar laminates without the sheets of woven plastic material. Additionally, the laminates having the sheet of woven plastic material disclosed herein have greater stiffness and resiliency compared to similar laminates without the sheet of woven plastic material. Working examples were formed and tested to demonstrate the benefits of the laminates disclosed herein.

### WORKING EXAMPLES

### Working Example 1:

A laminate was formed according to Table 1 below to provide Working Example 1. The laminate of Working Example 1 was formed on an isobaric press.

**Table 1.**

| **Film Material** | **Quantity** | **Thickness (µm)** | **Weight (g/m²)** |
|---|---|---|---|
| ONXE (BOPP) | 1 | 0.02 | 0.018 |
| KXE (BOPP) | 4 | 0.16 | 0.144 |
| PP - no color or color | 1 | 0.03 | 0.034 |
| Torodon^{™} fabric (SRPP) | 1 | 0.15 | 0.13 |
| PP - no color | 1 | 0.03 | 0.034 |
| KXE (BOPP) | 11 | 0.44 | 0.396 |
| PP - no color | 1 | 0.03 | 0.034 |
| Torodon^{™} fabric (SRPP) | 1 | 0.15 | 0.13 |
| KXE (BOPP) | 2 | 0.08 | 0.072 |
| KXHSS (BOPP) | 2 | 0.08 | 0.072 |
| Total | 25 | 1.17 | 1.064 |

### Comparative Example A:

A laminate was formed according to Table 2 below to provide Comparative Example A. The laminate of Comparative Example A was formed on an isobaric press.

**Table 2.**

| **Film Material** | **Quantity** | **Thickness (µm)** | **Weight (g/m²)** |
|---|---|---|---|
| ONXE | 1 | 0.02 | 0.018 |
| KXE | 5 | 0.2 | 0.18 |
| PP/PE - color | 1 | 0.04 | 0.045 |
| TSS of KXE | 14 | 0.56 | 0.504 |
| PP/PE - color | 1 | 0.04 | 0.045 |
| KXE | 6 | 0.24 | 0.216 |
| KXHSS | 2 | 0.08 | 0.072 |
| Total | 30 | 1.18 | 1.08 |

### Comparative Example B:

A laminate was formed according to Table 3 below to provide Comparative Example B. The laminate of Comparative Example B was formed on an isobaric press.

**Table 3.**

| **Film Material** | **Quantity** | **Thickness (µm)** |
|---|---|---|
| PET | 1 | 0.067 |
| PP - color | 1 | 0.02 |
| Translucent fabric (SRPP) - visual weave pattern | 1 | 0.15 |
| PP - color | 2 | 0.04 |
| Translucent fabric (SRPP) | 1 | 0.15 |
| PP - color | 1 | 0.02 |
| Translucent fabric (SRPP) | 1 | 0.15 |
| PP - color | 1 | 0.02 |
| Translucent fabric (SRPP) | 1 | 0.15 |
| PP - color | 1 | 0.02 |
| Translucent fabric (SRPP) | 1 | 0.15 |
| PP - no color | 1 | 0.02 |
| Translucent fabric (SRPP) | 1 | 0.15 |
| Total | 13 | 1.11 |

### Comparative Example C:

A laminate was formed according to Table 4 below to provide Comparative Example C. The laminate of Comparative Example C was formed on an isobaric press.

**Table 4.**

| **Film Material** | **Quantity** | **Thickness (µm)** | **Weight (g/m²)** |
|---|---|---|---|
| ONXE | 1 | 0.02 | 0.018 |
| KXE | 5 | 0.2 | 0.18 |
| PP/PE - color | 1 | 0.04 | 0.045 |
| TSS of KXE | 12 | 0.56 | 0.504 |
| PP/PE - color | 1 | 0.04 | 0.045 |
| KXE | 6 | 0.24 | 0.216 |
| KXHSS | 2 | 0.08 | 0.072 |
| Total | 28 | 1.10 | 1.008 |

The laminates of Working Example 1, , Comparative Example A, Comparative Example B, and Comparative Example C (see Table 4 above) had similar thicknesses. Working Example 1, Comparative Example A, Comparative Example B, and Comparative Example C were subjected to testing to determine the physical characteristics (e.g., mechanical properties) thereof. Specifically, the Examples were subjected to tensile tests, impact resistance tests, stiffness tests, resilience tests, peel tests, and 3-point bending tests.

Laminates according to Working Example 1, Comparative Example A, and Comparative Example B were subjected to tensile tests and resilience tests as set forth below.

Four samples according to each of Working Example 1, Comparative Example A, and Comparative Example B were cut to rectangles of the same size (25 mm x 250 mm). Tensile tests were performed on the samples according to ASTM D3039 "Standard Test Method for Tensile Properties of Polymer Matrix Composite Materials." The samples were tested on an Instron 5985 testing machine with the load cell of 30 kN. Mechanical vice grips (e.g., clamps) were used to fix the samples within the testing machine. As end-tabs on the samples, sandpaper was used in order to avoid slippage in mechanical vice grips. The samples were tested at the 150 mm gauge length. The strain rate was 6%/min.

The tensile strength, stress, strain, and resilience properties were calculated from the results of the tensile tests.

Average surface strain was calculated using digital image correlation. Tensile modulus was calculated as the slope of the stress-strain diagram between 0.1% and 0.3% strain. Resilience was calculated as an area under the strain-stress curve up to the yield point. The yield point was found by means of 0.2% offset method. Tensile strength is the highest point of the stress-strain diagram, and the corresponding strain is the failure strain.

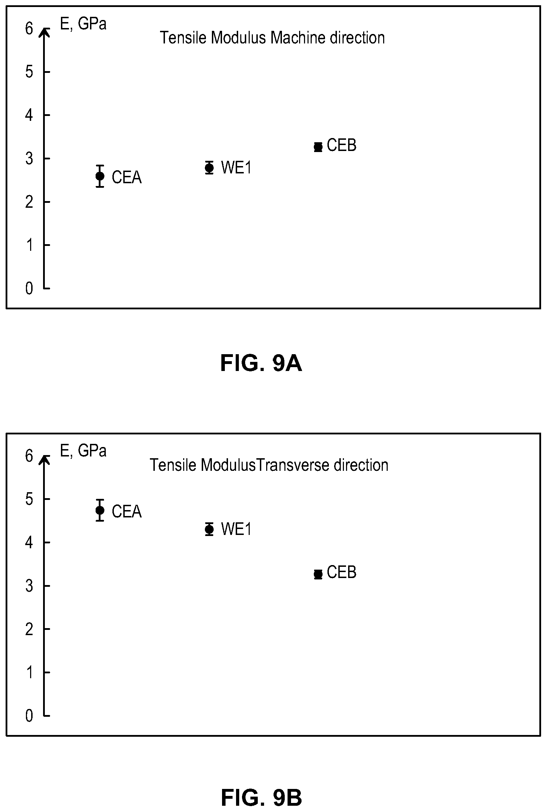

FIGS. 9A and 9B are graphs of the results of tensile modulus (Young's modulus) testing of the Examples in the machine and transverse directions, respectively. As shown in FIG. 9A, Comparative Example A (noted as CEA in FIGS. 9A-10B) exhibited the lowest tensile modulus in the machine direction with a Young's Modulus (E) of about 2.5 gigapascals (GPa), Working Example 1 (noted as WE1 in FIGS. 9A-10B) had a higher tensile modulus in the machine direction than Comparative Example A with an E value of about 2.8 GPa, and Comparative Example B (noted as CEB in FIGS. 9A-10B) had the highest tensile modulus in the machine direction with an E value of about 3.1 GPa. As shown in FIG. 9B, Comparative Example B exhibited the lowest tensile modulus in the transverse direction with an E value of about 3.1 GPa, Working Example 1 had a higher tensile modulus in the transverse direction than Comparative Example B with an E value of about 4.3 GPa, and Comparative Example A had the highest tensile modulus in the transverse direction with an E value of about 4.7 GPa.

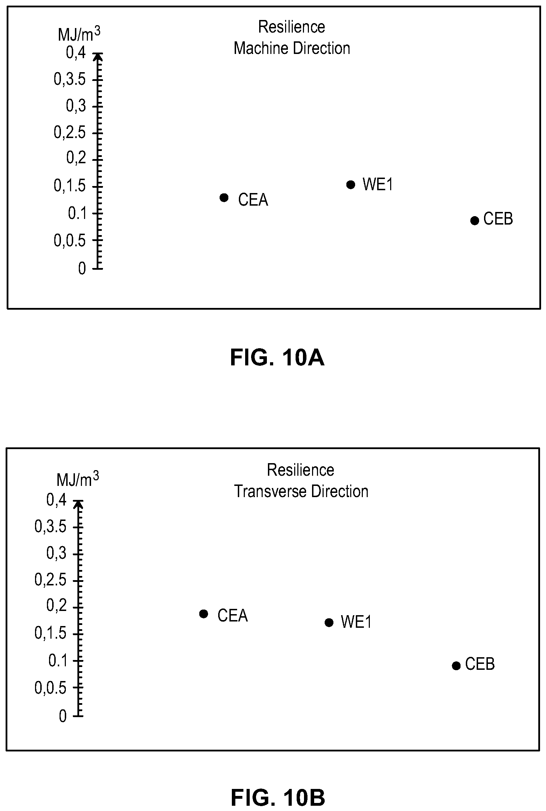

FIGS. 10A and 10B are graphs of the results of resilience testing of the Examples in the machine and transverse directions, respectively. The Examples were tested according to the protocols disclosed above with respect to the tensile testing as summarized in FIGS. 9A and 9B, and the resilience properties determined from the tensile testing also as set forth above. Resiliency is a reference for the amount of energy that a material can absorb without plastically or permanently deforming. As shown in FIG. 10B, Comparative Example B exhibited the lowest resilience in the transverse direction with a resilience of about 0.08 MJ/m³, Working Example 1 had a higher resilience in the transverse direction than Comparative Example B with a resilience of about 0.17 MJ/m³, and Comparative Example A had the highest resilience in the transverse direction (slightly higher than Working Example 1) with a resilience of about 0.18 MJ/m³. As shown in FIG. 10A, Comparative Example B exhibited the lowest resilience in the machine direction with a resilience of about 0.8 MJ/m³, Comparative Example A had a higher resilience in the transverse direction than Comparative Example B with a resilience of about 0.14 MJ/m³, and Working Example 1 had the highest resilience in the transverse direction with a resilience of about 0.16 MJ/m³. Working Example 1 exhibited the highest combined resilience (in both directions), outperforming the materials in the comparative examples in terms of resiliency or "real life" impact resistance.

Three-point bending tests (used to calculate the flexural modulus characteristic) were performed according to standard ASTM D7264 "Flexural Properties of Polymer Matrix Composite Materials." Five rectangular samples having the size of 13 mm by 50 mm were formed for each Example laminate and tested in both the machine and transverse directions. The three-point bending tests were carried out on an Instron 5943 testing machine equipped with a 100 N load cell.

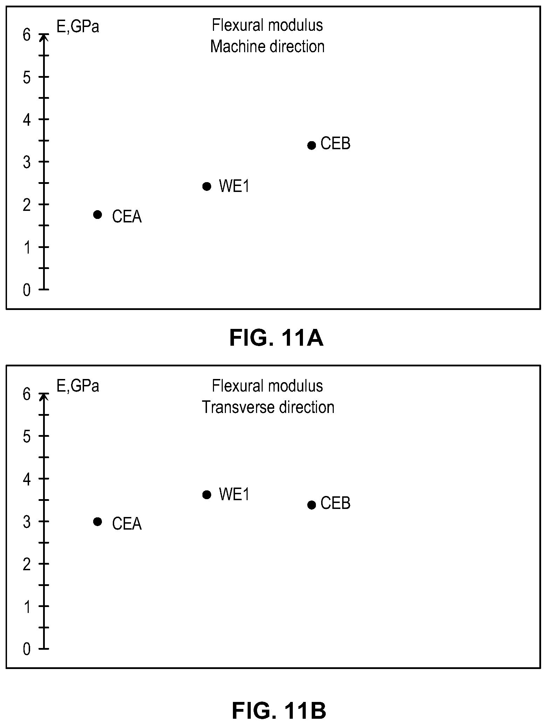

FIGS. 11A and 11B are graphs of the results of flexural modulus testing in the machine and transverse directions, respectively. As shown in FIG. 11A, Comparative Example B exhibited the highest flexural modulus in the machine direction, with a flexural modulus of about 3.3GPa, Working Example 1 had a higher flexural modulus in the machine direction than Comparative Example A with a flexural modulus of about 2.4 GPa, and Comparative Example A had the lowest flexural modulus in the machine direction with a flexural modulus of about 1.8 GPa. As shown in FIG. 11B, Comparative Example A exhibited the lowest flexural modulus in the transverse direction with a flexural modulus of about 2.9 GPa, Comparative Example B had a higher flexural modulus in the transverse direction than Comparative Example A with a flexural modulus of about 3.2 GPa, and Working Example 1 had the highest flexural modulus in the transverse direction with a flexural modulus of about 3.6 GPa. The relatively higher flexural modulus (e.g., stiffness) in Working Example 1 allows for more design freedom for cases (e.g., suitcases) using the laminate of Working Example 1 relative to the comparative examples. For example, the stiffer material of Working Example 1 avoids the need for certain geometric configurations used for structural stiffness.

Additional testing was performed regarding the effect of adding sheets of woven plastic material to laminates beyond just two layers. For example, flexural modulus and tensile tests were performed on laminates having two and four sheets of woven plastic material according to Working Example 1. The flexural modulus and tensile strength (e.g., stiffness) tests demonstrated that there was substantially no difference in bending stiffness and strength in the transverse direction of the laminate and only a slight increase in bending stiffness and strength in the machine direction. However, even the increase observed when using to four sheets of woven plastic material was not as large as the increase in bending stiffness and strength observed when two sheets of woven plastic material instead of none. Accordingly, diminishing returns are expected by adding further sheets of woven plastic material to laminates beyond two sheets.

The test results demonstrated that Working Example 1 maintains good tensile strength and flexural characteristics in both the machine and transverse directions and excellent resilience in both the machine and transverse directions. Accordingly, luggage shells made from the laminate of Working Example 1 are expected to provide lightweight yet strong, durable, and dent resistant luggage.

Laminates according to Working Example 1, Comparative Example A, and Comparative Example B were formed into luggage having the same structure and dimensions. The laminates of Working Example 1, Comparative Example A, and Comparative Example B were formed on an isobaric press and finally into top (e.g., front) and bottom (e.g., back) luggage shells in a cavity plug mold, and assembled into a suitcase The laminates for Working Example 1, Comparative Example A, and Comparative Example B had substantially similar thicknesses. The weight of the top and bottom shells was recorded for each Example.

**Table 5.**

| **Laminate** | **Top shell weight (g)** | **Bottom shell weight (g)** | **Total Weight (g)** |
|---|---|---|---|
| Working Example 1 | 642 | 681 | 1,323 |
| Comparative Example A | 640 | 667 | 1,307 |
| Comparative Example B | 659 | 658 | 1,317 |

As shown in Table 5, the luggage shells formed with Working Example 1, Comparative Example A, and Comparative Example B also had substantially similar weights.

Luggage formed with laminates according to Working Example 1, Comparative Example A, Comparative Example B, and Comparative Example C was subjected to compression testing to determine the stiffness of the Examples. Such testing determines the sturdiness (e.g., stiffness) of luggage when a force is applied to the top of an assembled luggage case, such as when a user rests (e.g., sits) upon the top panel.

Luggage formed with laminates according to Working Example 1, Comparative Example A, Comparative Example B, and Comparative Example C had the same structure, dimension, and components (e.g., wheels and zipper). A carry handle, logo, and pull handle were not installed on the Examples. For testing, each piece of luggage was positioned in a tensile tester with its wheels down on a flat surface and the zipper connected between the two shells. The luggage was initially loaded with a force of 50 Newtons, at which point the displacement was recorded as zero to avoid any small deformation already present in the luggage shells of the Examples. Then the compressive force was increased steadily until a selected amount of displacement was observed. The selected amounts of displacement were 8 mm, 16 mm, and 20 mm. The force required to achieve the selected amounts of displacement was recorded for each example. The results of stiffness testing are shown in Table 6 below for each Example.

**Table 6.**

| | 8 mm | 16 mm | 20 mm |
|---|---|---|---|
| Comparative Example B | 315N | 585N | 660N |
| Working Example 1 | 315N | 585N | 675N |
| Comparative Example C | 255N | 520N | 615N |
| Comparative Example A | 275N | 570N | 640N |

As shown in Table 6, Working Example 1 demonstrated the highest load required for displacement at each increased amount of displacement, and solely outperformed all other Examples at the 20 mm displacement level.

Accordingly, at least some of the embodiments disclosed herein are stiffer than other laminates used for luggage.

Peel testing was performed on laminated combinations of materials for use in Working Example 1 with variations in combinations of SRPP materials, BOPP materials, matrix materials, and the temperature at which the materials were bonded. Specifically, T-Peel testing was performed according to standard ASTM D1876-08.

For testing, ten rectangular samples of each material combination (except the combination of BOPP and PP bonded at 125 °C, which only had two samples) having a size of 250 mm by 20 mm were cut from a 0.6 mm thick panel with an unbonded side (e.g., end) of 76mm in length. During manufacturing of the samples, a release film was inserted in the stack between the layers to be tested, leaving one side of the sample panel unbonded. The T-portion of the sample combinations were formed by clamping the respective materials in opposing clamps to pull the respective materials in opposite directions to determine the peel strength of the bond between the materials. These samples were tested on an Instron 5943 testing machine, gripping and pulling the ends apart at a rate of 254 mm/min. The peel strength was calculated as the averaged peel load normalized by the width after the first initial peak according to the ASTM D1876-08 testing procedure.

Specific sample combinations (SCs) were formed with various combinations of materials in adjacent layers of a stack at various bonding temperatures including 125 °C, 130 °C, 140 °C, and 150 °C. Some of the sample combinations (SCs) were made with a MAPP matrix layer instead of a PP matrix layer bonded to the BOPP or SRPP. The SCs include the materials specified in Working Example 1. The materials of the SCs for the T-peel testing are described in Table 7 below.

**Table 7.**

| **Sample Combination** | **Materials** | **Bonding Temperature** |
|---|---|---|
| SC1 | BOPP and MAPP | 140 °C |
| SC2 | SRPP (Don & Low 1) and PP | 130 °C |
| SC3 | SRPP (Don & Low 2) and PP | 140 °C |
| SC4 | BOPP and MAPP | 150 °C |
| SC5 | SRPP (Don & Low 1) and PP | 140 °C |
| SC6 | SRPP (Don & Low 2) and SRPP (Don & Low 2) | 140 °C |
| SC7 | SRPP (Don & Low 2) and PP | 150 °C |
| SC8 | SRPP (Don & Low 2) and BOPP | 140 °C |
| SC9 | SRPP (Don & Low 1) and PP | 150 °C |
| SC10 | BOPP and PP | 125 °C |
| SC11 | SRPP (Don & Low 1) and MAPP | 140 °C |
| SC12 | SRPP (Don & Low 2) and MAPP | 150 °C |

Don & Low 1 and Don & Low 2, differ from each other in melting temperature, with Don & Low 1 having a melting temperature in the range of 140-145 °C and Don & Low 2 having a melting temperature in the range of 125-130 °C.

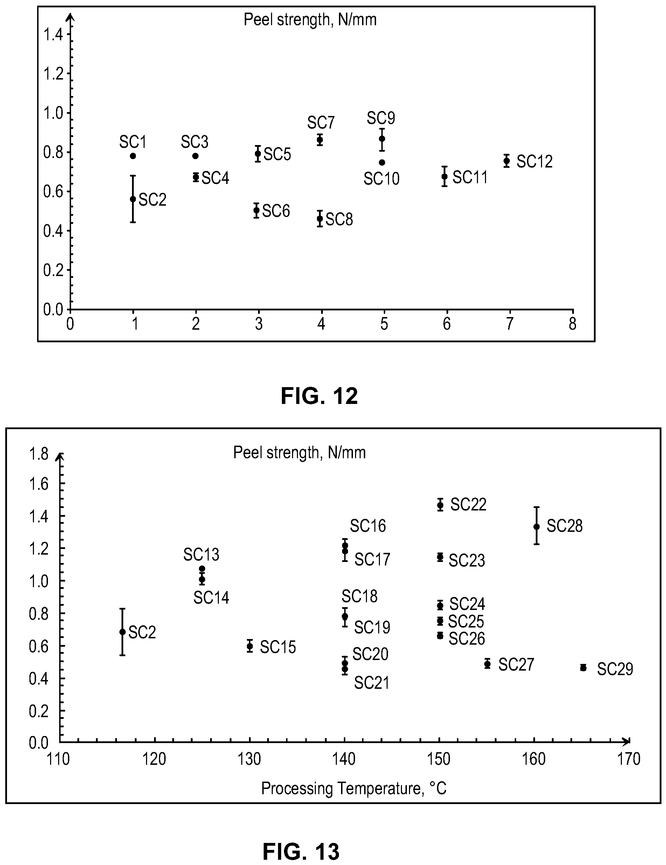

FIG. 12 is a graph of the results of T-Peel testing. As shown in FIG. 12, SC1 exhibited an average peel strength of about 0.78 Newtons/millimeter (N/mm), SC2 exhibited an average peel strength of about 0.56 N/mm, SC3 exhibited an average peel strength of about 0.78 N/mm, SC4 exhibited an average peel strength of about 0.67 N/mm, SC5 exhibited an average peel strength of about 0.78 N/mm, SC6 exhibited an average peel strength of about 0.50 N/mm, SC7 exhibited an average peel strength of about 0.87 N/mm, SC8 exhibited an average peel strength of about 0.46 N/mm, SC9 exhibited an average peel strength of about 0.87 N/mm, SC10 exhibited an average peel strength of about 0.72 N/mm, SC11 exhibited an average peel strength of about 0.67 N/mm, and SC12 exhibited an average peel strength of about 0.73 N/mm.

The results of the T-Peel tests show the strength of the bonds between the materials of the sample combinations SC1-SC12, expressed in peel strength. The results of SC8 demonstrate that a direct BOPP to SRPP bond is weakest of the sample combinations, followed closely by the SRPP to SRPP bond of SC6. The results of testing on SC10 show that BOPP to PP bond (even at the relatively low temperature of 125 °C) is stronger than the BOPP to SRPP bond. The SRPP to MAPP bond of SC11 and SC12 were also stronger than the SRPP to SRPP bond of SC6 and SRPP to BOPP bond of SC8. Further, all of the SRPP to PP bonds of SC2, SC3, SC5, SC7, and SC9 were stronger than the SRPP to BOPP bond of SC8 and SRPP to SRPP bond of SC6. BOPP to MAPP bonds in SC1 and SC4 were also stronger than the SRPP to BOPP bond and SRPP to SRPP bond.

Based on the T-Peel testing, PP film (PP or MAPP) between SRPP fabric (Don & Low 1 or Don & Low 2) and BOPP film increases the bonding strength between those materials compared to a direct bond of SRPP to BOPP.

The bonds between SRPP and PP in SC2, SC5, and SC9 showed increasing strength with increasing bonding temperature. Similarly, the bonds between SRPP and PP in SC3 and SC7 showed increasing strength with increasing bonding temperature.

Additional T-Peel testing was carried out according to the methods set forth above ().

Additional SCs were formed with various combinations of materials in adjacent layers of a stack at various bonding temperatures including 125 °C, 130 °C, 140 °C, 150 °C, 155 °C, 160, °C, and 165 °C. Some of the sample combinations (SCs) were made with a MAPP matrix layer instead of a PP matrix layer bonded to the BOPP or SRPP. The SCs include the materials specified in Working Example 1. The materials of the SCs for the T-peel testing are described in Table 7 below.

The materials of the SCs for the additional T-peel testing are described in Table 8 below.

**Table 8.**

| **Sample Combination** | **Materials** | **Bonding Temperature** |
|---|---|---|
| SC13 | BOPP and PP | 125 °C |
| SC14 | BOPP and BOPP | 125 °C |
| SC15 | SRPP (Don & Low 2) and PP | 130 °C |
| SC16 | BOPP and BOPP | 140 °C |
| SC17 | BOPP and PP | 140 °C |
| SC18 | BOPP and MAPP | 140 °C |
| SC19 | SRPP (Don & Low 2) and PP | 140 °C |
| SC20 | SRPP (Don & Low 2) and SRPP (Don & Low 2) | 140 °C |
| SC21 | SRPP (Don & Low 2) and BOPP | 140 °C |
| SC22 | BOPP and BOPP | 150 °C |
| SC23 | BOPP and PP | 150 °C |
| SC24 | SRPP (Don & Low 2) and PP | 150 °C |
| SC25 | SRPP (Don & Low 2) and MAPP | 150 °C |
| SC26 | BOPP and MAPP | 150 °C |
| SC27 | SRPP (Don & Low 2) and BOPP | 155 °C |
| SC28 | BOPP and BOPP | 160 °C |
| SC29 | SRPP (Don & Low 2) and BOPP | 165 °C |

FIG. 13 is a graph of the results of the additional T-Peel testing. As shown in FIG. 13, SC13 exhibited an average peel strength of about 1.1 N/mm, SC14 exhibited an average peel strength of about 1.05 N/mm, SC15 exhibited an average peel strength of about 0.6 N/mm, SC16 exhibited an average peel strength of about 1.25 N/mm, SC17 exhibited an average peel strength of about 1.22 N/mm, SC18 exhibited an average peel strength of about 0.8 N/mm, SC19 exhibited an average peel strength of about 0.8 N/mm, SC20 exhibited an average peel strength of about 0.5 N/mm, SC21 exhibited an average peel strength of about 0.48 N/mm, SC22 exhibited an average peel strength of about 1.5 N/mm, SC23 exhibited an average peel strength of about 1.2 N/mm, SC24 exhibited an average peel strength of about 0.88 N/mm, SC25 exhibited an average peel strength of about 0.75 N/mm, SC26 exhibited an average peel strength of about 0.66 N/mm, SC27 exhibited an average peel strength of about 0.5 N/mm, SC28 exhibited an average peel strength of about 1.4 N/mm, and SC29 exhibited an average peel strength of about 0.45 N/mm.

The results of the additional T-Peel tests show the strength of the bonds between the materials of the sample combinations SC13-SC29, expressed in peel strength. The results of SC21, SC27, and SC29 demonstrate that a direct SRPP to BOPP bond is weakest of the additional sample combinations, followed closely by the SRPP to SRPP bond of SC20. The results of testing on SC15 show that the SRPP (Don & Low 2) to PP bond formed at 130 °C is the next weakest. The BOPP to MAPP bond formed at 150 °C of SC26 to MAPP bond formed at 150 °C of SC24 as well as the SRPP to PP bond formed at 150 °C of SC25 are stronger than the SRPP to BOPP bonds. The BOPP to MAPP bonds of SC18 and the SRPP to PP bonds of SC19, both formed at 140 °C, are roughly equal to the SRPP to MAPP bond formed at 150°C of SC25. The BOPP to MAPP bond of SC13 formed at 125 °C and the BOPP to BOPP bonds of SC14 formed at 125 °C have a higher bond strength than SC15, SC18-SC21, SC24-27, and SC29.

The BOPP to PP bonds of SC13, SC17 and SC23, formed at 125°C, 140 °C, and 150°C respectively are stronger than all tested bonds except the BOPP to BOPP bonds. The BOPP to BOPP bonds of SC16, SC22, and SC28 were stronger than all other tested bonds.

Based on the additional T-Peel tests, PP film (PP or MAPP) between SRPP fabric (Don & Low 2) and BOPP film increases the bonding strength between those materials compared to a direct bond of SRPP to BOPP at all tested formation temperatures.

The bonds between SRPP and PP in SC15, SC18, and SC24 showed increasing strength with increasing bonding temperature.

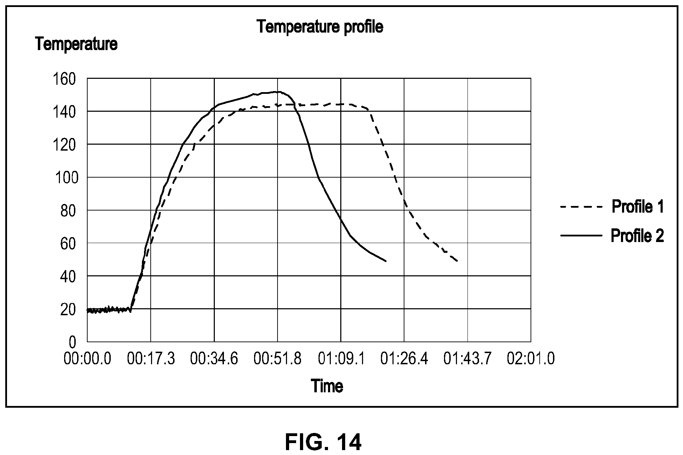

FIG. 14 is a graph of temperature profiles for laminates according to WE1. The temperature profiles used in lamination runs for WE1 differ in temperature through two zones in an isobaric press. Profile 1 includes a temperature of 155 °C in a first zone and temperature of 145 °C in a second zone. Profile 2 includes a temperature of 170 °C in the first zone and temperature of 155 °C in the second zone.

As used herein, the term "about" includes a value within ± 5% of the value modified by the term "about."

As used herein, the reference to standards such as ASTM or ISO standards refers to the respective standards as of the filing date of this application.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A luggage shell (720, 722, 734) formed by a laminate (100, 210), the laminate (100, 210) comprising:
a first set of biaxially oriented polypropylene (BOPP) films, at least one of the first set of BOPP films (110) including a coextruded film including a core (202, 302) of a thermoplastic polymer and at least one outer layer (204) of a thermoplastic polymer;
a second set of BOPP films (120), at least one of the second set of BOPP films (120) including a core (202, 302) of a thermoplastic polymer and at least one outer layer (204) of a thermoplastic polymer;
at least one sheet of woven plastic material (130, 150, 400) disposed between the first set of BOPP films (110) and the second set of BOPP films (120); and
at least one matrix layer (140, 141, 142, 143) disposed on at least one side of one or more of the at least one sheet of woven plastic material (130, 150, 400).

2. The luggage shell of claim 1, further comprising a third set of BOPP films (180) disposed between the first set of BOPP films (110) and the second set of BOPP films (120), wherein the at least one sheet of woven plastic material (130, 150, 400) includes:
a first sheet of woven plastic material (130, 150, 400) disposed between the first set of BOPP films (110) and the third set of BOPP films (180); and
a second sheet of woven plastic material (130, 150, 400) disposed between the second set of BOPP films (120) and the third set of BOPP films (180).

3. The luggage shell of claim 2 wherein the at least one matrix layer (140, 141, 142, 143) includes a first matrix layer (140, 141, 142, 143) disposed on the top side of the first sheet of woven plastic material (130, 150, 400), a second matrix layer (140, 141, 142, 143) disposed on a bottom side of the first sheet of woven plastic material (130, 150, 400), and a third matrix layer (140, 141, 142, 143) disposed on a top side of the second sheet of woven plastic material (130, 150, 400).

4. The luggage shell of claim 2 or 3 wherein:
the first set of BOPP films (110) includes 1 to 10 BOPP films;
the second set of BOPP films (120) includes 1 to 10 BOPP films; and
the third set of BOPP films (180) includes 1 to 20 BOPP films.

5. The luggage shell of any of claims 2 to 4 wherein:
the first set of BOPP films (110) includes 3 to 5 BOPP films;
the second set of BOPP films (120) includes 3 to 6 BOPP films;
the third set of BOPP films (180) includes 7 to 14 BOPP films; and
the at least one matrix layer (140, 141, 142, 143) includes a first matrix layer (140, 141, 142, 143) disposed on the top side of the first sheet of woven plastic material (130, 150, 400), a second matrix layer (140, 141, 142, 143) disposed on a bottom side of the first sheet of woven plastic material (130, 150, 400), and a third matrix layer (140, 141, 142, 143) disposed on a top side of the second sheet of woven plastic material (130, 150, 400).

6. The luggage shell (720, 722, 734) of claim 1, further comprising a third set of BOPP films (180) disposed between the first set of BOPP films (110) and the second set of BOPP films (120), wherein the at least one sheet of woven plastic material (130, 150, 400) includes:
a first sheet of woven plastic material (130, 150, 400) disposed between the first set of BOPP films (110) and the third set of BOPP films (180);
a second sheet of woven plastic material (130, 150, 400) disposed between the second set of BOPP films (120) and the third set of BOPP films (180);
a third sheet of woven plastic material (130, 150, 400) disposed between the first sheet of woven plastic material (130, 150, 400) and the second sheet of woven plastic material (130, 150, 400); and
a fourth sheet of woven plastic material (130, 150, 400) disposed between the third sheet of woven plastic material (130, 150, 400) and the second sheet of woven plastic material (130, 150, 400);
wherein the at least one matrix layer (140, 141, 142, 143) includes a first matrix layer (140, 141, 142, 143) disposed on the top side of the first sheet of woven plastic material (130, 150, 400), a second matrix layer (140, 141, 142, 143) disposed on a top side of the second sheet of woven plastic material (130, 150, 400), a third matrix layer (140, 141, 142, 143) disposed on a top side of the third sheet of woven plastic material (130, 150, 400), and a fourth matrix layer (140, 141, 142, 143) disposed on a top side of the fourth sheet of woven plastic material (130, 150, 400).

7. The luggage shell (720, 722, 734) of any of claims 2 to 6 wherein:
the first set of BOPP films (110) has a thickness of 5% to 15% of a total thickness of the laminate (100, 210);
second set of BOPP films (120) has a thickness of 12% to 18% of a total thickness of the laminate (100, 210); and
the third set of BOPP films (180) has a thickness of 35% to 45% of the total thickness of the laminate (100, 210).

8. The luggage shell (720, 722, 734) of any of claims 1 to 7 wherein the at least one sheet of woven plastic material (130, 150, 400) has a thickness of less than 10% of the total thickness of the laminate (100, 210).

9. The luggage shell (720, 722, 734) of any of claims 1 to 8 wherein the at least one matrix layer (140, 141, 142, 143) includes a maleic anhydride-grafted polypropylene (MAPP) layer or a polypropylene film layer.

10. The luggage shell (720, 722, 734) of any of claims 1 to 9 wherein the at least one sheet of woven plastic material (130, 150, 400) includes at least one self-reinforced polypropylene (SRPP) sheet.

11. The luggage shell (720, 722, 734) of any of claims 1 to 10 wherein:
the at least one sheet of woven plastic material (130, 150, 400) includes a plurality of longitudinally stretched polypropylene tapes arranged in a selected weave pattern; and
the selected weave pattern is visible through the first set of BOPP films (110).

12. The luggage shell (720, 722, 734) of any of claims 1 to 11 wherein:
one or more of the at least one matrix layer (140, 141, 142, 143), the at least one sheet of woven plastic material (130, 150, 400), the first set of BOPP films (110), or the second set of BOPP films (120) includes a colorant; and
the colorant is at least partially visible through the first set of BOPP films (110).

13. The luggage shell (720, 722, 734) of any of claims 1 to 12 wherein:
the second set of BOPP films (120) forms an inner surface of the laminate (100, 210) and an innermost BOPP film of the second set of BOPP films (120) is white; and
a color intensity of the laminate (100, 210) viewed from an outermost surface thereof exhibits a greater color intensity than an identically composed laminate (100, 210) that does not include the innermost **BOPP** film that is white.

14. A luggage case, comprising:
at least one luggage shell (720, 722, 734) according to any of claims 1 to 13;
one or more handles (774) attached to the at least one luggage shell (720, 722, 734); and
a plurality of wheels (772) attached to the at least one luggage shell (720, 722, 734).

15. A method of making a luggage shell (720, 722, 734), the method comprising:
forming a lay-up according to the laminate (100, 210) of any of claims 1 to 13;
laminating the lay-up at a uniform pressure in an isobaric press;
forming the laminated (100, 210) lay-up into a luggage shell (720, 722, 734) using a plug cavity mold.
